# EUROPÄISCHE PATENTSCHRIFT

(11) **EP 2 510 897 B1**
(45) Veröffentlichungstag und Bekanntmachung des Hinweises auf die Patenterteilung: **17.08.2016**
(21) Anmeldenummer: 12162886.1
(22) Anmeldetag: 02.04.2012
(51) Int. Cl.: A61C 5/06, B65D 81/32

(54) **Misch- und Applikationskapsel zur Herstellung eines Dentalpräparates**
Mixing and application capsule for producing a dental preparation
Capsule de mélange et d'application pour la fabrication d'une préparation dentaire

(30) Priorität: 11.04.2011 DE 202011005121 U
(43) Veröffentlichungstag der Anmeldung: 17.10.2012
(73) Patentinhaber: VOCO GmbH, 27472 Cuxhaven (DE)
(72) Erfinder: Leiner, Uwe, 27632 Midlum (DE); Plaumann, Manfred Thomas, 27476 Cuxhaven (DE)
(74) Vertreter: Eisenführ Speiser

(56) Entgegenhaltungen:
- EP-A1- 0 157 121
- WO-A1-00/23002
- US-A- 2 869 543
- US-A- 3 076 456
- US-A- 3 303 846
- US-A- 3 557 787
- US-A- 3 724 460
- US-A- 4 515 267
- US-A- 5 172 807

## Beschreibung

Die vorliegende Erfindung betrifft eine Misch- und Applikationskapsel zur Herstellung eines Dentalpräparates.

Im Allgemeinen dienen Misch- und Applikationskapseln zur Vermischung von zwei oder mehr Komponenten, vorzugsweise einer festen Komponente und einer fluiden Komponente, um beispielsweise ein Dentalpräparat herzustellen, welches aus der Misch- und Applikationskapsel in einen Bereich innerhalb der Mundhöhle eines Patienten appliziert wird. Auf diese Weise wird mittels Vermischen einer Pulverkomponente mit einer Flüssigkeitskomponente beispielsweise Glasionomerzement hergestellt.

Es sind aus dem Stand der Technik verschiedene Vorrichtungen und Techniken bekannt, welche sich dem Unterbringen der festen und der fluiden Komponente innerhalb der Misch- und Applikationskapsel widmen, um gleichermaßen ein befriedigendes Mischverhalten und Applikationsverhalten zu erreichen.

Die Flüssigkeit wird beispielsweise in einem Folienbeutel untergebracht, der durch Aufplatzen geöffnet wird. Der Folienbeutel wird anschließend ausgedrückt, um die Flüssigkeit aus diesem zu pressen und der pulverförmigen Komponente zuzuführen.

Dieses Verfahren weist den Nachteil auf, dass es insbesondere bei einem im Verhältnis zum Beuteldurchmesser sehr langen Beutel vorkommt, dass die Folie beim Zusammendrücken Falten wirft, in denen ein unbestimmter Flüssigkeitsrest verbleibt. Das Ergebnis ist, dass die Dentalpräparatmasse mit zu wenig Flüssigkeit vermengt wird, so dass sie nicht die gewünschten Eigenschaften aufweist. Daher sind entweder die Größe des Folienbeutels und damit die Flüssigkeitsmenge beschränkt oder aber die Dosierung erfolgt ungenau. Der Durchmesser des Folienbeutels lässt sich in der Regel nicht beliebig variieren, da die Kapsel einen entsprechend größeren Durchmesser aufweisen müsste. Eine Kapsel mit großem Durchmesser ist jedoch von Nachteil bei der Applikation in der Mundhöhle eines Patienten. Auch sind die zum Ausdrücken der Misch- und Applikationskapsel verwendeten Ausdrückzangen üblicherweise für kleine Kapseldurchmesser angepasst.

Eine Variation besteht darin, dass ein Folienbeutel seitlich auf bzw. an dem Kapselkörper angeordnet ist. Ein solcher Beutel kann daher einen deutlich größeren Durchmesser und Flüssigkeitsmenge aufweisen. Jedoch besteht der Nachteil, dass ein separates Aktivierwerkzeug erforderlich ist, um den Folienbeutel zu öffnen und dessen Inhalt in der Kapsel in Kontakt mit dem Pulver zu bringen (d.h., um die Kapsel zu aktivieren). Auch verbleibt in einem Beutel mit großem Durchmesser proportional mehr Flüssigkeit.

Ein weiteres Beispiel einer Flüssigkeitsunterbringung in einer Misch- und Applikationskapsel zur Herstellung eines Dentalpräparates ist in US 6,386,872 B1 beschrieben. Im Inneren des Kapselkörpers sind ein erster und ein zweiter Kolben angeordnet, in deren Zwischenraum eine Flüssigkeit angeordnet ist. Der erste Kolben begrenzt den Mischraum im Inneren des Kolbenkörpers, in dem die pulverförmige Komponente angeordnet ist. Die Kolbenwand zwischen Mischkammer und Flüssigkeitsraum weist eine Sollbruchstelle auf. Wird der zweite Kolben in Richtung der Mischkammer geschoben, durchbricht ein Vorsprung des zweiten Kolbens die Sollbruchstelle der Wand des ersten Kolbens, so dass die Flüssigkeit in die Mischkammer fließt, um sich dort mit der pulverförmigen Komponente zu vermischen. Nach der Aktivierung, beispielsweise indem die Kapsel von Hand auf eine Tischoberfläche gedrückt wird, muss die Kapsel in ein Mischgerät eingespannt werden, welches Pulver und Flüssigkeit durch Schüttelbewegungen zu einer Paste vermischt.

Anschließend wird die Kapsel in eine Ausdrückzange eingespannt, mit deren Hilfe beide Kolben weiter nach vorne bewegt werden. Die Paste wird dabei durch die Kanüle ausgetragen und beispielsweise in eine Kavität eines zu behandelnden Zahnes gefüllt.

Die Anordnung gemäß US 6,386,872 B1 weist den Nachteil auf, dass Diffusionsverluste der Flüssigkeit bestehen und die Misch- und Applikationskapsel daher nicht geeignet ist, über einen längeren Zeitraum hinweg gelagert zu werden. Die Dichtung zwischen dem ersten und zweiten Kolben ist eine schleifende Dichtung. Ist die Dichtung leichtgängig gewählt, so dass eine Verschiebung des zweiten Kolbens gegenüber dem ersten Kolben manuell möglich ist, ist keine ausreichende Dichtung gegeben und die Flüssigkeit kann zwischen erstem und zweitem Kolben verdunsten. Wird die Dichtung so eng gewählt, dass eine Verdunstung der Flüssigkeit durch die Dichtung nahezu vollständig vermieden wird, lässt sich der zweite Kolben gegenüber dem ersten Kolben nur unter Aufwendung einer großen Kraft verschieben, die spezielle Werkzeuge erfordert und nicht mehr manuell möglich ist. Ferner besteht ein ähnliches Problem der Flüssigkeitsverdunstung für die Dichtung zwischen dem ersten Kolben und dem Kapselkörper. Die pulverförmige Komponente im Mischraum ist hygroskopisch und neigt daher dazu, durch die Dichtung zwischen ersten Kolben und Kapselkörper eintretende Feuchtigkeit aufzunehmen. Auch dies beeinträchtigt die Langzeitlagerfähigkeit der Misch- und Applikationskapsel. Zusätzlich ist der dünnwandige Sollbruchstellenbereich der Wand des ersten Kolbens leicht für die Flüssigkeit zu durchdringen. Die pulverförmige Komponente kann also nicht nur über die Dichtung zwischen erstem Kolben und Kapselkörper, sondern auch durch den Sollbruchstellenbereich der Wand des ersten Kolbens Feuchtigkeit aus der Flüssigkeit aufnehmen.

Es ist aus DE 10 2009 016 862 eine Misch- und Applikationskapsel bekannt, welche die Probleme des übrigen Standes der Technik aufgreift und löst. Die aus DE 10 2009 016 862 bekannte Vorrichtung beruht auf dem Doppelkolbenprinzip, wobei ein erster Kolbenkörper ein Doppelkolben ist, und zwischen dem ersten Kolbenkörper und dem zweiten Kolbenkörper ein Hohlraum ausgebildet ist, dessen Inhalt bei Druckbeaufschlagung des ersten Kolbenkörpers aus dem Hohlraum durch einen Kanal hindurch herausgepresst wird. Wenn beispielsweise in dem Hohlraum eine Fluidkomponente vorgehalten wird und in einem mittels des Kanals mit dem Hohlraum verbundenen Mischraum eine weitere Mischkomponente, beispielsweise eine Pulverkomponente, so wird mittels der Doppelkolbenbewegung in dem Mischraum das Vermengen der beiden Komponenten ausgelöst.

Die Funktionsweise der aus DE 10 2009 016 862 bekannten Vorrichtung ist bereits zufriedenstellend. Allerdings ist in eigenen Untersuchungen an Misch- und Applikationskapseln des aus DE 10 2009 016 862 bekannten Typs unter extremen Testbedingungen bisweilen das Problem aufgetreten, dass geringe Mengen der Mischkomponente aus dem Mischraum in den Kanal hinein und durch ihn hindurch in Richtung des Hohlraumes gelangen. Dies bewirkt unter den extremen Testbedingungen, dass in Einzelfällen bei einer Druckbeaufschlagung und dem damit einhergehenden Herauspressen der Fluidkomponente aus dem Hohlraum bereits vor dem Durchtreten der Fluidkomponente durch den Kanal in den Mischraum ein Vermengen der Fluidkomponente mit der Mischkomponente auftritt. Dies kann theoretisch zu Verstopfungen des Kanals führen, oder - falls sich die Mischkomponente in anderen Bereichen festgesetzt hat - zu einem Blockieren der Bewegung des ersten und/oder zweiten Kolbenkörpers, wodurch das vollständige Vermischen der beiden Komponenten und schlimmstenfalls auch das vollständige Austreiben des Dentalpräparats erschwert oder verhindert wird.

US 3,724,460 offenbart eine Misch- und Applikationskapsel zur Herstellung eines medizinischen Präparates, wobei die Misch- und Applikationskapsel aufweist: - einen Kapselkörper mit einem Mischraum zum Aufnehmen einer Mischkomponente und zum Mischen des Dentalpräparates aus der Mischkomponente und einem Fluid und mit einer Austrittsöffnung zum Ausbringen des Dentalpräparates, - einen im Kapselkörper verschiebbaren ersten Kolbenkörper, der den Mischraum im Kapselkörper begrenzt und der einen Kanal zum Führen des Fluids von dem Hohlraum in den Mischraum aufweist, - einen im Kapselkörper relativ zu dem ersten Kolbenkörper verschiebbaren Behälter für das Fluid, wobei der erste Kolbenkörper eine spitzige Kanüle trägt, wobei der Behälter für das Fluid von einer Dichtung verschlossen ist, und die Kanüle dazu eingerichtet ist, die Dichtung zu durchdringen, wenn der erste Kolbenkörper und der Behälter relativ zueinander bewegt werden.

Ein weiteres Problem, das bisweilen bei der bekannten Misch- und Applikationskapsel auftreten könnte, ist jenes, dass bisweilen zum Ende der Phase der Druckbeaufschlagung und somit zum Ende des Austreibens des Dentalpräparats aus dem Mischraum nur noch Flüssigkeit aus der Misch- und Applikationskapsel austritt. Dieser Effekt ist darin begründet, dass zum Austreiben der Paste eine verhältnismäßig hohe Kraft aufgebracht wird, die deutlich höher ist als diejenige, die zum Aktivieren der Kapsel, also zum Austreiben der Flüssigkeit nötig ist. Wird das Aktivieren nicht vollständig genug durchgeführt, so verbleibt ein geringer Rest Flüssigkeit, der dann erst durch die hohe Kraft während der Druckbeaufschlagung, also während des Appliziervorganges austritt.

Somit lag der vorliegenden Erfindung die Aufgabe zugrunde, die vorstehend aufgeführten, unter extremen Testbedingungen oder theoretisch auftretenden Nachteile möglichst weitgehend abzumildern.

Die Erfindung löst die ihr zugrunde liegende Aufgabe gemäß einem ersten Aspekt bei einer Misch- und Applikationskapsel zur Herstellung eines Dentalpräparats, wobei die Misch- und Applikationskapsel aufweist:
einen Kapselkörper mit einem Mischraum zum Aufnehmen einer Mischkomponente und zum Mischen des Dentalpräparates aus der Mischkomponente und einem Fluid (42) und mit einer Austrittsöffnung zum Ausbringen des Dentalpräparates,
einen Hohlraum zum Aufnehmen des Fluids,
einen im Kapselkörper verschiebbaren Kolbenkörper, der den Mischraum im Kapselkörper begrenzt und der einen Kanal zum Führen des Fluids von dem Hohlraum in den Mischraum aufweist,
wobei vorzugsweise der Kanal ein Verschlussmittel mit einem oder mehreren Verschlusselementen aufweist, welche in drucklosem Zustand derart anliegen, dass das Verschlussmittel undurchlässig für den Übertritt von Mischkomponente in den Kanal ist, und welche dazu eingerichtet sind, den Kanal unter Druckbeaufschlagung des Hohlraums in Richtung des Mischraums freizugeben,
wobei der Kolbenkörper teilweise oder vollständig aus zwei oder mehr voneinander unterschiedlichen Materialien, umfassend mindestens eine Weichkomponente und mindestens eine Hartkomponente, besteht,
und die Verschlusselemente des Verschlussmittels teilweise oder vollständig aus der Weichkomponente bestehen.

Die Misch- und Applikationskapsel gemäß dem ersten Aspekt der Erfindung weist vorzugsweise auch die Merkmale einer Misch- und Applikationskapsel gemäß dem (weiter unten diskutierten) zweiten Aspekt und/oder dem (weiter unten diskutierten) dritten Aspekt der Erfindung und/oder dem (weiter unten diskutierten) vierten Aspekt der Erfindung auf. Sämtliche Hinweise zu bevorzugten Ausgestaltungen der Erfindung gemäß dem zweiten, dritten und vierten Aspekt der Erfindung gelten insoweit auch für die entsprechenden Ausgestaltungen gemäß dem ersten Aspekt der Erfindung.

Der Erfindung liegt gemäß dem ersten Aspekt die Erkenntnis zugrunde, dass ein zuverlässiger Verschluss des Kanals gegen Eindringen von Mischkomponente aus dem Mischraum vor allem dann gewährleistet sein muss, wenn der Hohlraum nicht mit Druck beaufschlagt ist. Dies ist in erster Linie während der Lagerung oder des Transports der Misch- und Applikationskapsel der Fall. Es ist mithin vorzugsweise ein Verschlusselement notwendig, welches in drucklosem Zustand zuverlässig schließt, aber gleichzeitig bei Druckbeaufschlagung den Kanal zum Durchtritt von Fluid in Richtung des Mischraumes ermöglicht. Dies ist erfindungsgemäß vorzugsweise dadurch verwirklicht, dass an dem Kanal ein Verschlussmittel ausgebildet ist, welches aus einer Weichkomponente besteht, die gleichzeitig auch Teil des Kolbenkörpers ist, welcher aus zwei oder mehr unterschiedlichen Materialien besteht. Die Hartkomponente und die Weichkomponente des Kolbenkörpers sind gemäß der Erfindung mechanisch miteinander verbunden. Hierdurch wird mit einem einzigen Bauteil - dem Kolbenkörper - mittels der Hartkomponente eine ausreichende Stabilität gewährleistet, und zugleich mittels der Weichkomponente in entsprechender Form das Verschlussmittel bzw. dessen Verschlusselemente bereitgestellt.

Die Verbindung beider Materialien kann durch eine dem Fachmann bekannte geeignete Materialkombination derart gewählt werden, dass beide Materialien eine feste Verbindung miteinander eingehen. Bei Materialpaarungen, die sich nicht fest miteinander verbinden, kann zum Ausgleich eine kraft- oder formschlüssige Verbindung, beispielsweise eine Klebeverbindung konstruiert werden.

Die Mischkomponente umfasst vorzugsweise ein pulverförmiges Material. Besonders bevorzugt ist die Mischkomponente ein pulverförmiges Material.

Das pulverförmige Material weist bevorzugt eine durchschnittliche Partikelgröße d₅₀ auf, welche in einem Bereich von 1 µm bis 100 µm liegt. Unter d₅₀ wird die mittlere Partikelgröße verstanden. Mittels der erfindungsgemäßen Gestaltung des Verschlussmittels mit Verschlusselementen aus Weichkomponente an einem Kolbenkörper, der teilweise oder vollständig aus zwei oder mehr voneinander unterschiedlichen Materialen, umfassend mindestens eine Weichkomponente und mindestens eine Hartkomponente, besteht, können selbst sehr feinkörnige Mischkomponenten in dem Mischraum vorgehalten werden, ohne dass sie durch den Kanal hindurch in Richtung des Hohlraums mit der Fluidkomponente gelangen können. Hierfür trägt maßgeblich das gute Schließverhalten der aus der Weichkomponente ausgebildeten Verschlusselemente bei.

Die Mischkomponente ist vorzugsweise in dem Mischraum des Kapselkörpers enthalten.

Gemäß einer bevorzugten Ausführungsform sind die Verschlusselemente als Taschenklappen oder Segelklappen ausgebildet. Die Verschlusselemente stützen sich vorzugsweise in geschlossenem Zustand gegenseitig ab, wodurch das Dichtverhalten des Verschlusselements in Richtung des Hohlraums noch verbessert wird. Nach Vorbild einer Rückschlagklappe sind die Klappen des Verschlussmittels nur in Richtung des Mischraums klappbar, aber nicht in Richtung des Hohlraums. Vorzugsweise ist das Öffnungs- und Schließverhalten der Verschlusselemente humanen oder bovinen Herzklappen nachempfunden. Diese vereinen den Vorteil zuverlässigen Schließens auch damit, dass in geöffnetem Zustand ein möglichst großer Strömungsquerschnitt freigegeben ist, was den Strömungswiderstand und somit die notwendige Presskraft bei der Druckbeaufschlagung verringert.

Bevorzugt sind die Verschlusselemente zum Freigeben des Kanals elastisch verformbar. Hierdurch wird beim Bewegen der Verschlusselemente in eine Öffnungsstellung eine Rückstellkraft erzeugt, die ein automatisches Schließen bei Nachlassen der Druckbeaufschlagung wirkt. Durch das elastische Verformungsverhalten sind die Verschlusselemente dazu eingerichtet, auch wiederholt zu öffnen und zu schließen, beispielsweise wenn die Druckbeaufschlagung zwischenzeitlich unterbrochen werden muss.

Die Verschlusselemente und der Kanal sind bevorzugt einstückig ausgebildet. Vorzugsweise sind die Verschlusselemente und der Kanal stoffschlüssig miteinander verbunden. Dies wird entweder gewährleistet, indem die Verschlusselemente und der Kanal aus denselben Material bestehen, oder aus zwei unterschiedlichen Materialien, wobei die Verschlusselemente aus einer Weichkomponente bestehen und der Kanal aus einer Hartkomponente. Die Verbindung der Verschlusselemente und des Kanals miteinander erfolgt vorzugsweise mittels Kleben, Schweißen, Spritzgießen oder Klemmen.

Gemäß einer weiteren bevorzugten Ausführungsform der Misch- und Applikationskapsel sind die Verschlusselemente dazu ausgebildet, unter Druckbeaufschlagung eine schlitzförmige, kreuzförmige oder sternförmige Öffnung des Kanals freizugeben. Vorzugsweise ist eine sternförmige Öffnung mit einem N-Eck als Basis ausgebildet, wobei N vorzugsweise gleich oder größer 2 ist. Der Schlitz ist in bevorzugten Alternativen entweder linear ausgebildet und/oder entlang eines Kurvenverlaufs. Ein linearer Schlitz weist ein besseres Dichtverhalten auf, weil die Schlitzfläche, welche abgedichtet werden muss, im Verhältnis zur erreichbaren Öffnung klein ist. Im Gegenzug ist bei Ausbildung eines Schlitzes entlang eines Kurvenverlaufs, beispielsweise eines Omegas oder eines Kreisbogenabschnittes ein größerer Öffnungsquerschnitt erzielbar, was ein Ausströmen der Fluidkomponente in den Mischraum mit geringerem Strömungswiderstand ermöglicht. Letztere Schnittformen sind besonders bevorzugt ausgewählt für eine flache Klappe.

Die gleiche Betrachtung lässt sich auf die Ausbildung der Verschlusselemente als Klappen einer kreuz- oder sternförmigen Öffnung übertragen; je mehr klappenartige Verschlusselemente ausgebildet sind (je größer N bei einer sternförmigen Öffnung ist) desto größer wird der erreichbare Öffnungsquerschnitt, desto geringer wird allerdings potenziell die Dichtkraft aufgrund der vergrößerten Dichtfläche. Besonders bevorzugt ist in dem Zusammenhang, die Verschlusselemente derart anzuordnen, dass sie sich in geschlossenem Zustand gegenseitig abstützen, und vorzugsweise nach dem Vorbild von Rückschlagklappen angeordnet.

In einer weiteren bevorzugten Ausführungform der Misch- und Applikationskapsel ist das Verschlusselement bzw. sind die Verschlusselemente dazu angepasst, den Kanal unter Druckbeaufschlagung mittels Rissbildung, vorzugsweise in dem Material der Weichkomponente oder in einem Übergangsbereich zwischen den Materialien der Weichkomponente und der Hartkomponente, freizugeben.

Die erfindungsgemäßen Vorteile, die sich aus den vorstehenden Betrachtungen ergeben, kommen bereits bei einer Misch- und Applikationskapsel mit lediglich einem einzelnen Kolbenkörper zum Tragen. Besonders bevorzugt ist aber eine Misch- und Applikationskapsel gemäß einer der vorherigen bevorzugten Ausführungsformen, mit einem im Kapselkörper relativ zu dem ersten Kolbenkörper verschiebbaren zweiten Kolbenkörper, der den Hohlraum zum Aufnehmen des Fluids aufweist.

Eine solche Taschen- oder Segelklappe lässt sich außerdem an der Austrittsöffnung im Übergang zur Mischkanüle platzieren. Die Elastizität der entsprechenden Verschlusselemente (Taschenflügel) muss an dieser Stelle jedoch höher sein, um während Lagerung und Transport das Pulver an einem Durchtritt in der vorgesehenen Fließrichtung zu hindern. Wie zuvor beschrieben steht zur Applikation der angemischten Paste bedingt durch die Verwendung eines mechanischen Applikationsgerätes / einer Applikationszange eine hohe Kraft zur Verfügung. Diese wird vorzugsweise dazu benutzt, die Paste durch die vergleichsweise hohe Schließkraft einer am Übergang zur Applikations-Kanüle platzierten Taschenklappe zur überwinden. Eine Kapsel mit einer solchen Taschenklappe im Übergang zur Applikationskanüle benötigt keine zusätzlichen Verschlusselemente wie Dreh- oder Schwenkverschlüsse. Es sei jedoch angemerkt, dass eine feststehende Kanüle zwar den Öffnungsvorgang der Kanüle überflüssig macht, jedoch bei der Aktivierung, also beim Einschieben des Kolbens durch Drücken auf eine Tischoberfläche hinderlich sein kann.

Bevorzugt weist der erste Kolbenkörper einen Vorsprung auf, und der Hohlraum des zweiten Kolbenkörpers ist dazu ausgestaltet, den Vorsprung des ersten Kolbenkörpers aufzunehmen.

Die Erfindung löst die ihr zugrundeliegende Aufgabe gemäß einem zweiten Aspekt bei einer Misch- und Applikationskapsel zur Herstellung eines Dentalpräparates, wobei die Misch- und Applikationskapsel aufweist:
einen Kapselkörper mit einem Mischraum zum Aufnehmen einer Mischkomponente und zum Mischen des Dentalpräparates aus der Mischkomponente und einem Fluid und mit einer Austrittsöffnung zum Ausbringen des Dentalpräparates,
einen Hohlraum zum Aufnehmen des Fluids,
einen im Kapselkörper verschiebbaren Kolbenkörper, der den Mischraum im Kapselkörper begrenzt und der einen Kanal zum Führen des Fluids von dem Hohlraum in den Mischraum und einen Vorsprung aufweist,
wobei der Hohlraum ausgestaltet ist, um den Vorsprung des ersten Kolbenkörpers aufzunehmen,
wobei der Kolbenkörper teilweise oder vollständig aus zwei oder mehr, voneinander unterschiedlichen, Materialien, umfassend mindestens eine Weichkomponente und mindestens eine Hartkomponente, besteht, wobei der Vorsprung derart an dem Kolbenkörper ausgebildet ist, dass der Kolbenkörper eine Struktur mit im Wesentlichen konstanter Wandstärke aufweist, vorzugsweise eine Wandstärke in einem Bereich von 0,3mm bis 3mm aufweist, und wobei die Struktur aus der Hartkomponente besteht.

Die Misch- und Applikationskapsel gemäß dem zweiten Aspekt der Erfindung weist vorzugsweise auch die Merkmale einer Misch- und Applikationskapsel gemäß dem ersten Aspekt und/oder dem (weiter unten diskutierten) dritten Aspekt der Erfindung und/oder dem (weiter unten diskutierten) vierten Aspekt der Erfindung auf. Sämtliche Hinweise zu bevorzugten Ausgestaltungen der Erfindung gemäß dem ersten, dritten und vierten Aspekt der Erfindung gelten insoweit auch für die entsprechenden Ausgestaltungen gemäß dem zweiten Aspekt der Erfindung.

Diesem zweiten Aspekt der Erfindung liegt die Erkenntnis zugrunde, dass das sogenannte Nachdrücken von Flüssigkeit aus der Kapsel aufgrund eines inkorrekten Mischverhältnisses oder einer inkorrekten Funktionsweise des Austreibens von Fluid aus dem Hohlraum in den Mischraum liegt. Es hat sich herausgestellt, dass durch die Druckbeaufschlagung, welche unter Aufbringen einer hohen Presskraft erfolgt, Fluid nicht wie vorgesehen vollständig und unmittelbar durch den Kanal hindurch in den Mischraum gefördert wird, sondern auch in Toträume ausweicht, welche zwischen dem Kanal und dem Hohlraum ausgebildet sind. Die Toträume bilden sich dadurch, dass beim Erzeugen des Kolbenkörpers Maßverzug auftritt; weil der Kolbenkörper der hohen aufzubringenden Presskraft widerstehen können muss, ist er bei bekannten Vorrichtungen im Wesentlichen als massives Bauteil hergestellt. Aufgrund der hohen Stückzahlen, in denen diese Hohlkörper hergestellt werden, ist es fertigungstechnisch unvermeidlich gewesen, den bekannten Hohlkörper als massives Bauteil zu gießen. Beim Erstarren tritt bekanntlich infolge von Materialschwindung an den Stellen mit variierender Wandstärke Maßverzug auf, welcher sich umso stärker auswirkt, je größer lokal die Wandstärke ausgebildet ist. Aufgrund dieses Maßverzuges bilden sich Toträume, in welchen bei einer Druckbeaufschlagung Fluid zurückbleibt. Dadurch, dass Fluid nicht vollständig ausgetrieben wird, stimmt entweder das Mischverhältnis nicht, oder das Fluid tritt erst zum Ende des Pressvorgangs aus, wenn bereits sämtliche Mischkomponente aus dem Mischraum ausgetrieben wurde. Es hat sich überraschend herausgestellt, dass die mechanische Stabilität des Kolbenkörpers, die zum Widerstehen der Presskraft während der Druckbeaufschlagung notwendig ist, auch durch eine Struktur mit im Wesentlichen konstanter Wandstärke gewährleistet wird, wobei die Struktur aus der Hartkomponente besteht. Dadurch, dass im Wesentlichen keine Wandstärkenschwankungen der Hartkomponente gemäß der erfindungsgemäßen Lösung in Kauf genommen werden müssen und somit vermieden werden, führt auch die Materialschwindung beim Erstarren der Hartkomponente des Kolbenkörpers nicht zu einem unterschiedlich ausgeprägten Maßverzug und somit zur Bildung von Toträumen. Folglich wird nurmehr weniger Flüssigkeit oder gar keine Flüssigkeit zurückgehalten, und das Applikationsverhalten der Misch- und Applikationskapsel insgesamt verbessert.

Vorzugsweise sind an der Struktur ein oder mehrere Hohlräume ausgebildet, welche teilweise oder vollständig mit der Weichkomponente gefüllt sind. Mittels der Weichkomponente kann in einem zweiten Arbeitsschritt die Struktur an den gewünschten Bereichen in den Hohlräumen aufgefüllt werden, sodass die mechanische Stabilität des Kolbenkörpers weiter verbessert wird, ohne lokalen Maßverzug infolge der Schwindung in Kauf nehmen zu müssen. Die auch bei der Weichkomponente auftretende Schwindung ist zum einen weniger stark, weil ein großer Teil der Volumens bereits mit der Hartkomponente besetzt ist und zum anderen wäre sie nicht relevant, da sie in einem Bereich stattfindet, der für die Funktion des Bauteils keine Rolle spielt.

Bevorzugt weist die Misch- und Applikationskapsel gemäß dem zweiten Aspekt der Erfindung einen im Kapselkörper relativ zu dem ersten Kolbenkörper verschiebbaren zweiten Kolbenkörper auf, der den Hohlraum zum Aufnehmen des Fluids aufweist.

Die Erfindung löst die ihr zugrundeliegende Aufgabe gemäß einem dritten Aspekt bei einer Misch- und Applikationskapsel zur Herstellung eines Dentalapparates, wobei die Misch- und Applikationskapsel aufweist:
einen Kapselkörper mit einem Mischraum zum Aufnehmen einer Mischkomponente und zum Mischen des Dentalpräparates aus der Mischkomponente und einem Fluid und mit einer Austrittsöffnung zum Ausbringen des Dentalpräparates,
einen Hohlraum zum Aufnehmen des Fluids,
einen im Kapselkörper verschiebbaren ersten Kolbenkörper, der den Mischraum im Kapselkörper begrenzt, und der einen Kanal zum Führen des Fluids von dem Hohlraum in den Mischraum aufweist,
einen im Kapselkörper relativ zu dem ersten Kolbenkörper verschiebbaren zweiten Kolbenkörper, der den Hohlraum zum Aufnehmen des Fluids und einen Vorsprung aufweist,
wobei der Kanal ausgestaltet ist, um den Vorsprung des zweiten Kolbenkörpers aufzunehmen, und,
wobei der Vorsprung und der Kanal derart aneinander angepasst sind, dass in einer Anlageposition des Vorsprungs und des Kanals aneinander ein oder mehrere Strömungskanäle verbleiben.

Die Misch- und Applikationskapsel gemäß dem dritten Aspekt der Erfindung weist vorzugsweise auch die Merkmale einer Misch- und Applikationskapsel gemäß dem ersten Aspekt und/oder dem zweiten Aspekt der Erfindung und/oder dem (weiter unten diskutierten) vierten Aspekt der Erfindung auf. Sämtliche Hinweise zu bevorzugten Ausgestaltungen der Erfindung gemäß dem ersten, zweiten und vierten Aspekt der Erfindung gelten insoweit auch für die entsprechenden Ausgestaltungen gemäß dem dritten Aspekt der Erfindung.

Die Erfindung macht sich gemäß diesem dritten Aspekt die Erkenntnis zu Nutze, dass das sogenannte Nachdrücken von Flüssigkeit auch dadurch zu Stande kommt, dass bei bekannten Misch- und Applikationskapseln der Vorsprung, welcher in dem Kanal des ersten Kolbenkörpers aufgenommen wird, diesen in einem späten Stadium der Druckbeaufschlagung vollständig verschließt, was den weiteren Austrieb von Flüssigkeit erschwert oder verhindert. Erfindungsgemäß wird aber der Hohlraum zunächst solange immer kleiner, und der Vorsprung dringt immer weiter in den Kanal ein, bis der Vorsprung und der Kanal gegeneinander in Anlageposition gelangen. In diesem Zustand ist nunmehr über die verbleibenden Strömungskanäle immer noch Flüssigkeitstransport möglich. Vorzugsweise weisen der Vorsprung und der Kanal jeweils eine oder mehrere Anlageflächen auf, welche in der Anlageposition des Vorsprungs und des Kanals aneinander fluiddicht miteinander abschließen.

Weiter bevorzugt sind in der einen oder den mehreren Anlageflächen des Vorsprungs Vertiefungen mit Wandungen ausgebildet, welche einen oder mehrere Strömungskanäle zum Fluidtransport definieren.
Alternativ oder zusätzlich sind in der einen oder den mehreren Anlageflächen des Kanals Vertiefungen mit Wandungen ausgebildet, welche einen oder mehrere Strömungskanäle zum Fluidtransport definieren.

Die Wandungen sind bevorzugt derart verformbar, dass die Strömungskanäle unter Aufbringen einer Presskraft in der Anlageposition auf den Vorsprung und/oder den Kanal teilweise oder vollständig verschließbar sind. Die Wandungen sind vorzugsweise elastisch oder plastisch verformbar. Der Vorteil dieser Ausführungsform ist darin zu sehen, dass gegen Ende der Druckbeaufschlagung, wenn der Vorsprung bereits in Anlageposition mit dem Kanal gebracht ist, durch eine Verformung des Kanals und/oder des Vorsprungs selbst die verbleibenden Strömungskanäle noch verschließbar sind und somit auch der letzte Rest Flüssigkeit aus dem Hohlraum in den Mischraum ausgepresst werden kann.

Die Misch- und Applikationskapsel gemäß dem dritten Aspekt der vorliegenden Erfindung wird dadurch vorteilhaft weitergebildet, dass der erste Kolbenkörper teilweise oder vollständig aus zwei oder mehr voneinander unterschiedlichen Materialien, umfassend mindestens eine Weichkomponente und eine Hartkomponente, besteht und der erste Kolbenkörper an seiner Umfangsfläche eine umlaufende Dichtung aufweist, welche teilweise oder vollständig aus der Weichkomponente besteht.

Die umlaufende Dichtung ist vorzugsweise dazu ausgebildet, in den zweiten Kolbenkörper einzutauchen, wodurch eine verbesserte Abdichtung gegen das Durchtreten der Fluidkomponente bereitgestellt wird. Gleichzeitig ist das Gleitverhalten dieser Dichtung im Vergleich zum Gleitverhalten der Hartkomponente deutlich verbessert, weil die Flexibilität der Weichkomponente eine sicher flüssigkeitsdichte Abdichtung vorteilhaft verbessert, ohne eine hohe Anpresskraft vorsehen zu müssen.

Mittels der umlaufenden Dichtung wird erreicht, dass die Fluidkomponente ausschließlich durch den Kanal in den Mischraum gefördert wird und nicht in einen etwaigen Ringraum entlang der Umfangsfläche des ersten Kolbenkörpers gerät.

Vorzugsweise weist der erste Kolbenkörper einen Vorsprung auf, wobei der Hohlraum, welcher in dem zweiten Kolbenkörper ausgebildet ist, ausgestaltet ist, um den Vorsprung des ersten Kolbenkörpers aufzunehmen.

Gemäß einer bevorzugten Ausführungsform der vorliegenden Erfindung ist der Hohlraum von einer Trennschicht, vorzugsweise einer Trennfolie, verschlossen, wobei der Vorsprung des ersten Kolbenkörpers und/oder der Vorsprung des zweiten Kolbenkörpers dazu eingerichtet sind, die Trennschicht zu durchdringen, wenn der erste Kolbenkörper, und der zweite Kolbenkörper relativ zueinander bewegt werden.

Bevorzugt weist der Vorsprung des zweiten Kolbenkörpers abschnittsweise oder vollständig einen Durchmesser auf, welcher den Durchmesser des Kanals derart übersteigt, dass bei einer Aufnahme des Vorsprungs in den Kanal ab einer bestimmten Eindringtiefe, vorzugsweise in einem Bereich von 5 bis 20 mm, die Außenfläche des Vorsprungs und die Innenfläche des Kanals fluiddicht aneinander liegen.

Bevorzugt ist der Vorsprung des zweiten Kolbenkörpers im Wesentlichen kegelförmig ausgebildet. Weiter bevorzugt weist der Kanal in Richtung des Hohlraums einen, vorzugsweise konisch, erweiterten Querschnitt auf. Besonders bevorzugt sind der Vorsprung des zweiten Kolbenkörpers kegelförmig und der Kanal konisch erweitert ausgebildet. Durch das Zusammenspiel dieser beiden Geometrieformen wird erreicht, dass der Vorsprung möglichst weit in den Kanal eindringen kann, ohne dass die aufgrund der Flächenpressung zwischen dem Vorsprung und dem Kanal aufzubringende Presskraft unzulässig hoch wird.

In einer bevorzugten Ausführungsform der erfindungsgemäßen Misch- und Applikationskapsel weist der Vorsprung des ersten Kolbenkörpers eine Schneide zum Aufschneiden der Trennschicht auf, wobei die Schneide entlang des Umfangs des Vorsprungs des ersten Kolbenkörpers angeordnet ist, und wobei die umlaufende Dichtung proximal zu der Schneide angeordnet ist, vorzugsweise in einem Abstand von 0,5mm bis 5mm. Je geringer der Abstand zwischen der Dichtung und der Schneide ist, desto weniger Flüssigkeit wird überhaupt erst in den sich bildenden Ringraum zwischen Schneide und Dichtung verdrängt, wenn die Druckbeaufschlagung einsetzt.

Die vorliegende Erfindung löst die ihr zugrundeliegende Aufgabe gemäß einem vierten Aspekt bei einer Misch- und Applikationskapsel zur Herstellung eines Dentalapparats, Misch- und Applikationskapsel zur Herstellung eines Dentalpräparates,
wobei die Misch- und Applikationskapsel aufweist:
einen Kapselkörper mit einem Mischraum zum Aufnehmen einer Mischkomponente und zum Mischen des Dentalpräparates aus der Mischkomponente und einem Fluid und mit einer Austrittsöffnung zum Ausbringen des Dentalpräparates,
einen Hohlraum zum Aufnehmen des Fluids,
einen im Kapselkörper verschiebbaren ersten Kolbenkörper, der den Mischraum im Kapselkörper begrenzt, und der einen Kanal zum Führen des Fluids von dem Hohlraum in den Mischraum aufweist, und
einen im Kapselkörper relativ zu dem ersten Kolbenkörper verschiebbaren zweiten Kolbenkörper, der den Hohlraum zum Aufnehmen des Fluids aufweist,
wobei der erste Kolbenkörper und/oder der zweite Kolbenkörper teilweise oder vollständig aus zwei oder mehr voneinander unterschiedlichen Materialien, umfassend mindestens eine Weichkomponente und mindestens eine Hartkomponente, bestehen.

Die Misch- und Applikationskapsel gemäß dem vierten Aspekt der Erfindung weist vorzugsweise auch die Merkmale einer Misch- und Applikationskapsel gemäß dem ersten Aspekt und/oder dem zweiten Aspekt der Erfindung und/oder dem dritten Aspekt der Erfindung auf. Sämtliche Hinweise zu bevorzugten Ausgestaltungen der Erfindung gemäß dem ersten, zweiten und dritten Aspekt der Erfindung gelten insoweit auch für die entsprechenden Ausgestaltungen gemäß dem vierten Aspekt der Erfindung.

Vorzugsweise ist die Austrittsöffnung in einer Kanüle angeordnet, welche mittels eines Gelenks dreh- bzw. schwenkbar an einem Ende des Kapselkörpers aufgenommen ist, wobei die Kanüle in einer Aufnahme an den Kapselkörper mittels einer Rastverbindung befestigt ist, und wobei die Richtung, in welche die Kanüle eingerastet ist, zu der Ausbringrichtung des Dentalpräparats abgewinkelt ist. Vorzugsweise ist die Richtung, in welche die Kanüle eingerastet ist, zu der Ausbringrichtung des Dentalpräparats in einem Winkel von 90° abgewinkelt.

Besonders bevorzugt ist die Richtung, in welche die Kanüle eingerastet ist, zu der Ausbringrichtung des Dentalpräparats in einem Winkel von 45° abgewinkelt. Der Vorteil des abgewinkelten Anordnens der Rastrichtung der Kanüle liegt darin, dass die Kanüle auf diese Weise nur erschwert oder gar nicht in folge der Druckbeaufschlagung aus der Rastposition herausgepresst werden kann. Die besonders bevorzugte Anordnung in einem 45°-Winkel bietet zusätzlich den Vorteil, dass die Kanüle, welche vorzugsweise mittels des Gelenks von einer Verschlussstellung in eine Öffnungsstellung bringbar ist, in der Öffnungsstellung nur erschwert aus der Rastposition heraus gehebelt werden kann, wenn die Kanüle seitlich auf eine Oberfläche gedrückt wird.

Gemäß einer weiteren bevorzugten Ausführungsform der erfindungsgemäßen Misch- und Applikationskapsel weist der Vorsprung des ersten Kolbenkörpers eine Schneide zum Aufschneiden der Trennschicht auf, wobei die Schneide entlang des Umfangs des Vorsprungs angeordnet ist, und entlang des Umfangs intermittierend aus der Weichkomponente und der Hartkomponente besteht. Vorzugsweise besteht die Schneide in vier Bereichen, die winklig jeweils um 90° beabstandet sind, aus Weichkomponente. Der Vorteil des intermittierenden Anordnens von Bereichen aus Weichkomponente und Hartkomponente entlang des Umfangs der Schneide ist darin zu sehen, dass aufgrund der lokalen Verformung der Weichkomponente Spannungsspitzen in der Trennschicht erzeugt werden, welche zu einem beschleunigten Einreißen und Durchtrennen der Trennschicht führen,

Gemäß einer weiteren bevorzugten Ausführungsform der erfindungsgemäßen Misch- und Applikationskapsel weist der zweite Kolbenkörper an einem dem Hohlraum gegenüberliegenden Ende eine Auskragung auf, vorzugsweise mit gerundeten Kanten. Die Auskragung erleichtert einerseits dem Bediener das Aufbringen einer Druckkraft auf den zweiten Kolbenkörper. Andererseits weist die Auskragung entlang ihres äußeren Umfangs eine Kante auf, welche als sichtbarer Indikator dient, wie tief der zweite Kolbenkörper schon in den Kapselkörper eingedrungen ist und wie viel Fluid demzufolge schon in den Mischraum gepresst worden ist. Optional wird auf der äußeren Umfangsfläche des zweiten Kolbenkörpers zur Erleichterung der Ablesbarkeit eine Skala angebracht.

Bevorzugt umfasst das Material der Weichkomponente ein thermoplastisches Elastomer (TPE), und das Material der Hartkomponente umfasst Polypropylen (PP). Weiter bevorzugt umfasst das Material der Weichkomponente Silikon, und das Material der Hartkomponente umfasst ein Polyester, vorzugsweise Polybutylenterephthalat (PBT). Besonders bevorzugt sind die Verschlusselemente des Verschlussmittels aus Weichkomponente hergestellt. Vorteil dieser Materialkombinationen ist jeweils, dass die Weichkomponente und die Hartkomponente aneinander haften, wodurch eine bessere Abdichtung gegenüber der Mischkomponente erreicht wird.

Alternativ oder zusätzlich umfasst das Material der Weichkomponente ein thermoplastisches Elastomer (TPE) und das Material der Hartkomponente Polyoxymethylen (POM). Weiter vorzugsweise umfasst das Material der Weichkomponente Polyethylen und das Material der Hartkomponente Polypropylen. Hierbei kann sowohl Polyethylen hoher Dichte (HDPE) oder Polyethylen geringer Dichte (LDPE) in Verbindung mit Polypropylen verwendet werden. Besonders bevorzugt sind die Verschlusselemente des Verschlussmittels aus Weichkomponente hergestellt. Als Vorteil dieser Materialkombinationen wird angesehen, dass die Weichkomponente und die Hartkomponente nicht aneinander haftend sind, wodurch das Aufklappen der Verschlusselemente erleichtert wird. Alternativ ist auch die Kombination LDPE als Weich- und HDPE als Hartkomponente vorgesehen, die eine feste Verbindung miteinander eingehen.

Die vorstehenden Materialkombinationen sind so ausgewählt, dass mit ihnen eine 2K-Spritzgussfertigung erfolgend kann.

Bevorzugt sind die Materialien des zweiten Kolbenkörpers und der Trennschicht aneinander angepasst. Der zweite Kolbenkörper besteht vorzugsweise aus Polyethylen hoher Dichte, und die Trennschicht besteht vorzugsweise aus Polyethylen. Dies ermöglicht einerseits das Aufschweißen der Trennschicht auf den zweiten Kolbenkörper. Andererseits weist Polyethylen eine verbesserte Diffusionsdichtigkeit gegen das Ausdünsten von Fluid aus dem Hohlraum heraus auf, insbesondere im Vergleich zu Polypropylen, welches bei bekannten Misch- und Applikationskapseln eingesetzt wird.

Andere vorteilhafte Materialpaarungen sowie die Verwendung von mehrschichtigen Verbundwerkstoffen für Kolben und/oder Trennschicht mit oder ohne metallische oder Barriereschichten sind dem Fachmann bekannt.

Es wurde bereits erwähnt, dass die Misch- und Applikationskapsel gemäß einem der Aspekte der Erfindung vorzugsweise auch die Merkmale einer Misch- und Applikationskapsel gemäß einem oder mehreren der weiteren Aspekte der Erfindung aufweist. Sämtliche Hinweise zu bevorzugten Ausgestaltungen der Erfindung gemäß einem der Aspekte der Erfindung gelten insoweit auch für die entsprechenden Ausgestaltungen gemäß den weiteren Aspekten der Erfindung.

Die Erfindung betrifft somit in bevorzugten Ausgestaltungen eine Misch- und Applikationskapsel zur Herstellung eines Dentalpräparats, wobei die Misch- und Applikationskapsel aufweist:
einen Kapselkörper mit einem Mischraum zum Aufnehmen einer Mischkomponente und zum Mischen des Dentalpräparates aus der Mischkomponente und einem Fluid und mit einer Austrittsöffnung zum Ausbringen des Dentalpräparates,
einen Hohlraum zum Aufnehmen des Fluids,
einen im Kapselkörper verschiebbaren Kolbenkörper, der den Mischraum im Kapselkörper begrenzt und der einen Kanal zum Führen des Fluids von dem Hohlraum in den Mischraum aufweist,
wobei (erster Aspekt der Erfindung) der Kanal ein Verschlussmittel mit einem oder mehreren Verschlusselementen aufweist, welche in drucklosem Zustand derart anliegen, dass das Verschlusssnittel undurchlässig für den Übertritt von Mischkomponente in den Kanal ist, und welche dazu eingerichtet sind, den Kanal unter Druckbeaufschlagung des Hohlraums in Richtung des Mischraums freizugeben,
wobei der Kolbenkörper teilweise oder vollständig aus zwei oder mehr voneinander unterschiedlichen Materialien, umfassend mindestens eine Weichkomponente und mindestens eine Hartkomponente, besteht,
und die Verschlusselemente des Verschlussmittels teilweise oder vollständig aus der Weichkomponente bestehen,
und/oder
wobei vorzugsweise (zweiter Aspekt der Erfindung) der Kolbenkörper einen Vorsprung aufweist,
wobei der Hohlraum ausgestaltet ist, um den Vorsprung des ersten Kolbenkörpers aufzunehmen,
wobei der Kolbenkörper teilweise oder vollständig aus zwei oder mehr voneinander unterschiedlichen Materialien, umfassend mindestens eine Weichkomponente und mindestens eine Hartkomponente, besteht, wobei der Vorsprung derart an dem Kolbenkörper ausgebildet ist, dass der Kolbenkörper eine Struktur mit im Wesentlichen konstanter Wandstärke aufweist, vorzugsweise eine Wandstärke in einem Bereich von 0,3mm bis 3mm aufweist, und wobei die Struktur aus der Hartkomponente besteht,
und/oder
wobei vorzugweise (dritter Aspekt der Erfindung) die Misch- und Applikationskapsel einen im Kapselkörper relativ zu dem ersten Kolbenkörper verschiebbaren zweiten Kolbenkörper aufweist, der den Hohlraum zum Aufnehmen des Fluids und einen Vorsprung aufweist,
wobei der Kanal ausgestaltet ist, um den Vorsprung des zweiten Kolbenkörpers aufzunehmen, und,
wobei der Vorsprung und der Kanal derart aneinander angepasst sind, dass in einer Anlageposition des Vorsprungs und des Kanals aneinander ein oder mehrere Strömungskanäle verbleiben,
und/oder
wobei vorzugsweise (vierter Aspekt der Erfindung) die Misch- und Applikationskapsel einen im Kapselkörper relativ zu dem ersten Kolbenkörper verschiebbaren zweiten Kolbenkörper, der den Hohlraum zum Aufnehmen des Fluids aufweist,
wobei der erste Kolbenkörper und/oder der zweite Kolbenkörper und/oder der Kapselkörper teilweise oder vollständig aus zwei oder mehr voneinander unterschiedlichen Materialien, umfassend mindestens eine Weichkomponente und mindestens eine Hartkomponente, bestehen.
Hinsichtlich bevorzugter Ausgestaltungen einer solchen Misch- und Applikationskapsel sei auf die obigen Ausführungen zu den Aspekten der vorliegenden Erfindung verwiesen, die entsprechend gelten, sowie auf die nachfolgenden Ausführungsbeispiele.

Die Ausführungsbeispiele betreffen Misch- und Applikationskapseln, welche gleichzeitig sämtlichen Aspekten der Erfindung genügen. Der Fachmann kann durch Fortlassen einzelner Merkmale, welche einzelnen Aspekten entsprechen, weitere Ausführungsbeispiele erzeugen, die einer reduzierten Anzahl von Aspekten genügen. Es versteht sich, dass die Merkmale der Ausführungsbeispiele, welche unterschiedliche Aspekte (der insgesamt vier erfindungsgemäßen Aspekte) betreffen, sowohl in der Zusammenschau als auch unabhängig voneinander relevant sind.

Im Folgenden wird die Erfindung anhand einiger Ausführungsbeispiele und unter Bezugnahme auf die beiliegenden Figuren näher erläutert. Hierbei zeigen:
- Figur 1a: eine räumliche Darstellung einer Misch- und Applikationskapsel eines ersten Ausführungsbeispiels gemäß dem ersten bis vierten Aspekt der Erfindung,
- Figur 1b: eine weitere räumliche Darstellung einer Misch- und Applikationskapsel der Misch- und Applikationskapsel des ersten Ausführungsbeispiels gemäß dem ersten bis vierten Aspekt der Erfindung,
- Figur 2: eine Querschnittsansicht der Misch- und Applikationskapsel aus Figur 1a und 1b in einer ersten Betriebsstellung,
- Figur 3: eine Querschnittsansicht der Misch- und Applikationskapsel aus Figur 2 in einer zweiten Betriebsstellung,
- Figur 4: eine Querschnittsansicht der Misch- und Applikationskapsel aus den Figuren 1a-3 in einer dritten Betriebsstellung,
- Figur 5: eine Detailansicht eines Bauteils der erfindungsgemäßen Misch- und Applikationskapsel aus den Figuren 1a-4,
- Figur 6: eine Querschnittsansicht des in Figur 5 gezeigten Bauteils,
- Figuren 7, 8: eine räumliche Darstellung des Bauteils aus den Figuren 5 und 6,
- Figuren 9, 10: Querschnittsansichten eines Bauteils der erfindungsgemäßen Misch- und Applikationskapsel eines zweiten Ausführungsbeispiels gemäß dem ersten bis vierten Aspekt der Erfindung,
- Figur 11: eine räumliche Darstellung eines weiteren Bauteils der erfindungsgemäßen Misch- und Applikationskapsel gemäß beiden Ausführungsbeispielen, und
- Figur 12: eine Detailansicht der erfindungsgemäßen Misch- und Applikationskapsel gemäß beiden Ausführungsbeispielen.

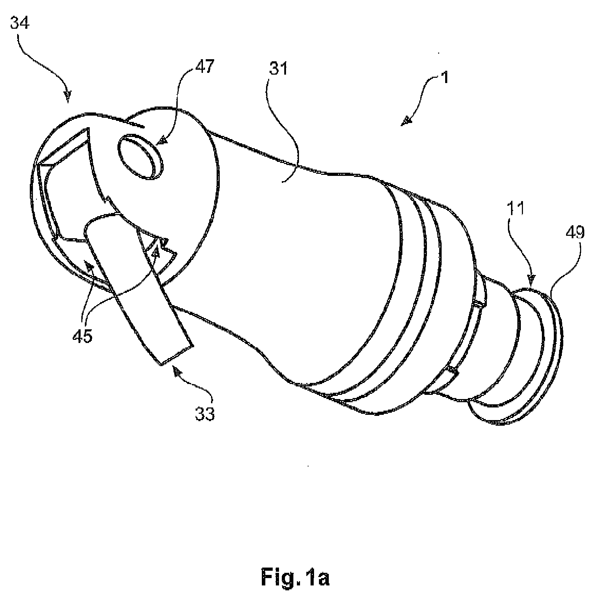

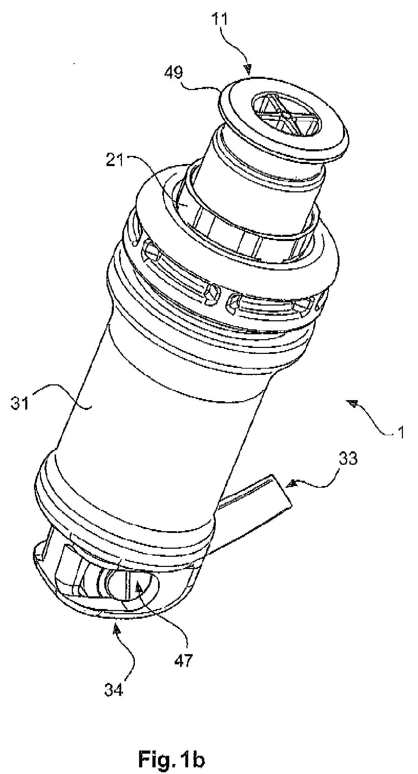

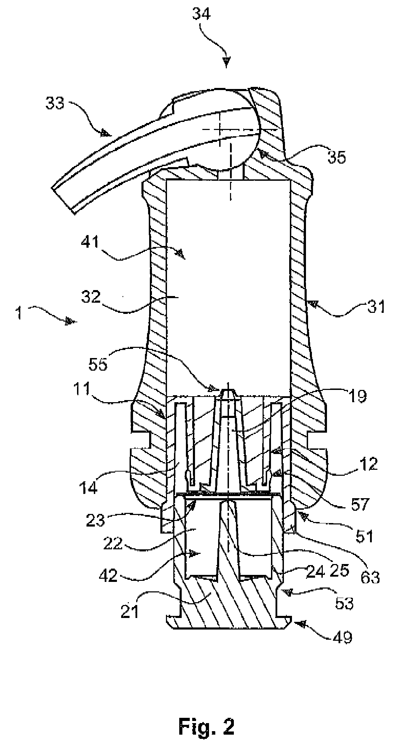

Figuren 1a und 1b zeigen zunächst eine Außenansicht einer erfindungsgemäßen Misch- und Applikationskapsel 1, im Folgenden als Kapsel 1 bezeichnet. Die Kapsel 1 weist einen Kapselkörper 31 auf. Innerhalb des Kapselkörpers 1 sind ein erster Kolbenkörper 11 (siehe Figuren 1a, 2) und ein zweiter Kolbenkörper 21 angeordnet. Der zweite Kolbenkörper 21 erstreckt sich teilweise außerhalb des Kapselkörpers 31. An dem außenliegenden Ende des zweiten Kolbenkörpers 21 ist eine Auskragung 49 ausgebildet.

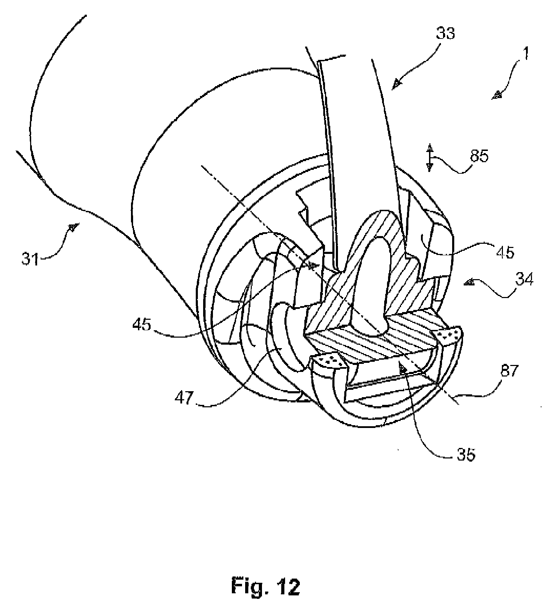

In Figur 1a links dargestellt ist an einem Ende der Kapsel 1, welches dem zweiten Kolbenkörper 21 gegenüberliegend angeordnet ist, eine Kanüle 33 angeordnet mit einem Auslass. Der Auslass ist zur Applikation des Dentalpräparats innerhalb des Mundbereichs eines Patienten ausgebildet. Die Kanüle ist zwischen einer geschlossenen Stellung und einer Öffnungsstellung hin- und her bewegbar. Gemäß Figur 1a ist die Kanüle in der geschlossenen Darstellung. In dieser Stellung befindet sich der Auslass nicht in fluidleitender Verbindung mit dem Inneren des Kapselkörpers 31. Die Kanüle 33 wird von zwei Flanken 45 in einer Rastverbindung gehalten und ist in diesen mittels einer Aufnahme 47 drehbar gelagert. Weitere Einzelheiten zu der Kanüle 33 sind Figur 12 zu entnehmen.

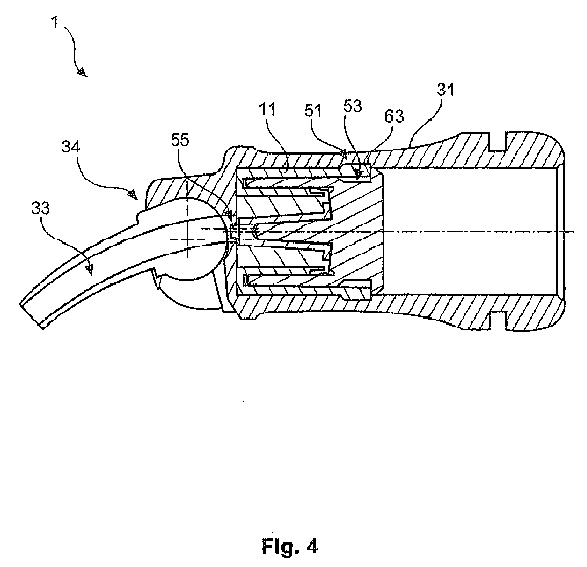

Flüssigkeitskolben 21 weist in seinem Inneren einen Vorsprung auf, der als Dorn 25 ausgebildet ist. Der Vorsprung 25 entspricht in Ausgestaltung und/oder Volumen im Wesentlichen einem als Durchtrittskanal ausgebildeten Kanal 19 des Stanzkolbens 11. Der Kanal 19 des Stanzkolbens 11 ist in der Ausführungsform der Figur 4 kegelförmig ausgestaltet, um den Dorn 22 aufzunehmen. Andere Querschnitte wie z.B. pyramidenförmig, zylindrisch oder sternförmig sind ebenfalls möglich.

In Figur 1b ist die Kapsel 1 aus einem anderen Blickwinkel als die Kapsel 1 gemäß dem ersten Ausführungsbeispiel in Figur 1a dargestellt. Gleiche und ähnliche Teile sind in Figur 1b mit gleichen Bezugszeichen versehen. Insoweit wird vollumfänglich auf die obige Beschreibung zu Figur 1a verwiesen.

Anhand der Figuren 2-4 wird der Betrieb der Kapsel 1 erläutert.

Figur 2 illustriert eine Ausführungsform einer Misch- und Applikationskapsel zur Herstellung eines Dentalpräparates 43 mit einem Kapselkörper 31, einem als Stanzkolben ausgebildeten ersten Kolbenkörper 11 und einem als Flüssigkeitskolben ausgebildeten zweiten Kolbenkörper 21. Der erste Kolbenkörper 11 besteht aus zwei unterschiedlichen Materialien, nämlich einer Weichkomponente und einer Hartkomponente (vierter Aspekt der Erfindung). Der Kapselkörper 31 ist im Wesentlichen zylindrisch ausgebildet und weist an einem ersten Ende eine Kanüle 34 auf, sie mittels eines Gelenkes 35 drehbar angeordnet ist. Die Kanülen-Gelenkanordnung 33, 35 ist bevorzugt als Kanülen-Sehwenk-Element ausgebildet. In einer ersten Stellung (wie in Figur 2 gezeigt) ist die Kappe 34 und die Kanüle 33 derart mittels des Gelenkes 35 gedreht, dass die Innenseite der Kanüle 33 nicht mit dem Mischraum 32 des Kapselkörpers 31 verbunden ist. In einer zweiten Stellung sind Kappe 34 und Kanüle 33 mittels des Gelenkes 35 so angeordnet (wie nachfolgend unter Bezugnahme auf Figur 2d erläutert wird), dass die im Inneren des Kapselkörpers 31 angemischte Dentalmasse 43 durch die Kanüle 33 ausgebracht werden kann.

Im Inneren des Kapselkörpers 31 ist der Mischraum 32 angeordnet, der als Hohlraum ausgebildet ist und im befüllten Zustand der Misch- und Applikationskapsel eine pulverförmige Komponente 41 aufweist, die mit Flüssigkeit 42 angemischt das Dentalpräparat 43 bildet. Der Mischraum 32 wird an dem ersten Ende des Kapselkörpers 31 durch die Kappen- und Kanülenanordnung 33, 34 und an dem offen ausgebildeten zweiten Ende des Kapselkörpers 31 durch den Stanzkolben 11 begrenzt. Darüber hinaus kann die Komponente 41 nicht nur pulverförmig, sondern stattdessen auch pastenförmig, flüssig oder fluid sein.

Der Stanzkolben 11 ist entlang der Längsachse des Kapselkörpers 31 verschiebbar angeordnet. Er dient der Auspressung der im Mischraum 32 hergestellten Dentalmasse 43 durch die Kanüle 33. Ein Fluid im Sinne dieser Anmeldung ist eine Substanz, die einer beliebig kleinen Scherspannung keinen Widerstand entgegensetzt, wie dies insbesondere für Gase und Flüssigkeiten zutrifft. In der in Figuren 1a und 1b gezeigten Ausführungsform ist der Kanal 19 entlang der zentralen Längsachse des Stanzkolbens 11 ausgebildet. Der Kanal 19 bildet die Verbindung zwischen Mischraum 32 und zweitem Kolbenkörper 21, der einen Hohlraum 22 zum Aufnehmen des Fluids 42 aufweist. Der Kanal 19 ist ausgestaltet, um zu verhindern, dass die pulverförmige Komponente 42 in den Kanal ein- bzw. durch diesen hindurchtritt.

Der als Flüssigkeitskolben ausgebildete zweite Kolbenkörper 21 ist auf der dem Mischraum 32 abgewandten Seite des als Stanzkolben ausgebildeten ersten Kolbenkörpers 11 angeordnet. Der Flüssigkeitskolben 21 weist einen insbesondere siegelfähigen oder siegelfähig beschichteten Hohlraum 22 auf, in dem die Flüssigkeit 42 angeordnet ist, die der Anmischung des Dentalpräparates 43 in Kombination mit der pulverförmigen Komponente 41 dient. Der Hohlraum 22 des Flüssigkeitskolbens 21 ist durch eine Trennschicht 23 hermetisch verschlossen.

Der Stanzkolben 11 weist einen Vorsprung 12 als Stempel auf, der in Gestalt und/oder Volumen dem Hohlraum 22 entspricht.

Der Hohlraum 22 des Flüssigkeitskolbens 21 ist seitlich durch einen radialen Vorsprung bzw. Randvorsprung 24 begrenzt, der den Randbereich des Flüssigkeitskolbens 21 und die Seitenwand des Hohlraumes 22 bildet. Der Randvorsprung 24 dient der Führung des Flüssigkeitskolbens 21 bei Verschiebung entlang der Längsachse des Kapselkörpers 31 und wird in entsprechend ausgebildeter Randausnehmung 14 im Randbereich des Stanzkolbens 11 aufgenommen.

Der Kapselkörper 31 weist an seinem kolbenkörperseitigen Ende eine Fase auf. Der erste Kolbenkörper 11 weist mehrere Vorsprünge 63 mit einer korrespondierenden Fase 51 auf. In Figur 2 ist die Stellung des ersten Kolbenkörpers in Anlage der Fase 51 an die korrespondierende Fase des Kapselkörpers 31 dargestellt. Der zweite Kolbenkörper 21 weist eine umlaufende Ausnehmung 53 auf, welche proximal zu der Auskragung 49 angeordnet ist.

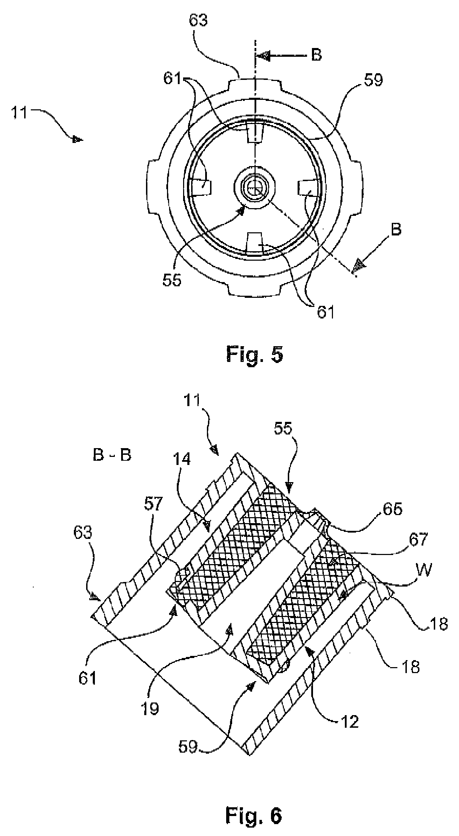

Der erste Kolbenkörper 11 weist an einem mischraumseitigen Ende des Kanals 19 ein Verschlussmittel 55 auf. Einzelheiten des Verschlussmittels 55 sind in den Figuren 5, 6 und 8 gezeigt. Der erste Kolbenkörper 11 weist einen Vorsprung 12 auf. Der Vorsprung 12 weist entlang seines Umfangs eine umlaufende Dichtung 57 auf. Zwischen einer äußeren Wandung des ersten Kolbenkörpers 11 und dem Vorsprung 12 ist eine Randausnehmung 14 ausgebildet. Die Randausnehmung 14 ist dazu ausgebildet, einen im Wesentlichen ringförmigen Randvorsprung 24 des zweiten Kolbenkörpers 21 aufzunehmen.

Der Betrieb der Misch- und Applikationskapsel gemäß der in Figur 2 gezeigten Ausführungsform durch Aktivierung und Ausbringung des Dentalpräparates ist in Figuren 2 bis 4 dargestellt. Die Misch- und Applikationskapsel der Figuren 2 bis 4 weist den Kapselkörper 31, den Stanzkolben 11 und den Flüssigkeitskolben 21 auf. Im Hohlraum 22 des Flüssigkeitskolbens 21 ist eine Flüssigkeit 42 angeordnet, wobei der Hohlraum 22 durch eine Trennschicht verschlossen ist. Im Mischraum 32 des Kapselkörpers 31, der durch die Kappen- und Kanülenanordnung 33, 34 einerseits und Stanzkolben 11 andererseits begrenzt wird, ist das Pulver 41 angeordnet.

Der Betrieb der erfindungsgemäßen Misch- und Applikationskapsel wird nun beginnend mit Figur 2 erläutert. Die Figur 2 zeigt die oben erläuterte Ausgangssituation. In einem ersten Verfahrensschritt wird Druck auf den Flüssigkeitskolben 21 in Richtung des Stanzkolbens 11 entlang der Längsachse des Kapselkörpers 31 ausgeübt. Durch die Inkontaktbringung des Vorsprunges 12 des Stanzkolbens 11 mit der Trennschicht 23 des Flüssigkeitskolbens 21 schneidet der Vorsprung 12 bei weiterer Verschiebung des Flüssigkeitskolbens 21 einen Teilbereich der Trennschicht 23 aus, wobei sich gleichzeitig der Vorsprung 25 durch die bei dem Vorgang außerdem verformte Trennschicht 23 bohrt. Der Flüssigkeitshohlraum 22 wird geöffnet. Die Flüssigkeit 42 fließt unmittelbar durch den Kanal 19 in den Mischraum 32 des Kapselkörpers 31 ab.

Durch weiteres Verschieben des Flüssigkeitskolbens 21 in Richtung des Stanzkolbens 11 wird der Vorsprung 12 des Stanzkolbens 11 in den Hohlraum 22 des Flüssigkeitskolbens 21 eingeführt, er verdrängt die Flüssigkeit 42 aus dem Hohlraum 22 und drückt sie in den Kanal 19 und den Mischraum 32 des Kapselkörpers 31. Dadurch, dass der Flüssigkeitskolben 21 seitlich durch den Randvorsprung 24 begrenzt ist, der in die Randausnehmung 14 des Stanzkolbens 11 eingeführt wird, kann ein Flüssigkeitsverlust in dem Randvorsprung 24 und über die Dichtung 57 zwischen Stanzkolben 11 und Flüssigkeitskolben vermieden werden. Hier wirkt unterstützend, dass die einzige Entweichungsmöglichkeit für die in der Randausnehmung 14 befindliche Luft durch den Kanal 19 hindurch gegeben ist und diese Luft die Flüssigkeit 42 mit sich reißt. Die somit in den Mischraum eingebrachte Luft sowie die Luft, die durch die eintretende Flüssigkeit 42 verdrängt wird, entweichen durch die Entlüftungsvorrichtungen des ersten Kolbens und/oder die Entlüftungsvorrichtung des Kapselkörpers.

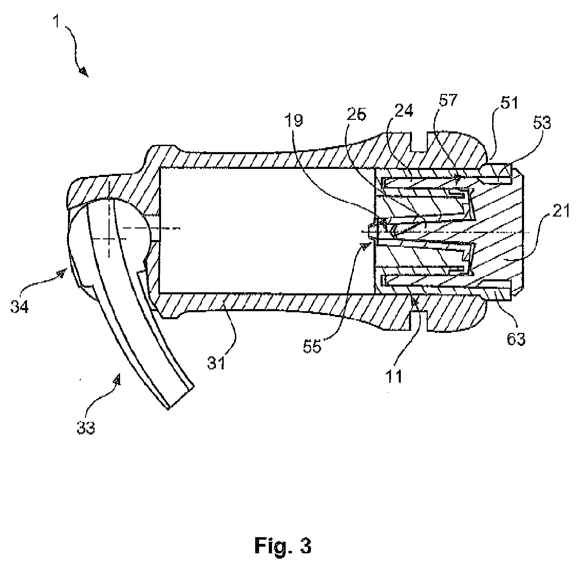

In Figur 3 ist der zweite Kolbenkörper 21 nahezu vollständig in den ersten Kolbenkörper eingeschoben. Die umlaufende Dichtung 57 ist durch den vorzugsweise ringförmigen Randvorsprung 24 des zweiten Kolbenkörpers 21 so weit verdrängt, dass sich der Randvorsprung 24 an der umlaufenden Dichtung 57 vorbei in das Innere der Randausnehmung 14 erstrecken kann. Hierbei dichtet die umlaufende Dichtung 57 die Kontaktfläche fluiddicht ab. Der zweite Kolbenkörper 21 ist in Figur 3 nahezu maximal in den ersten Kolbenkörper 11 hineingeschoben, sodass die Auskragung 49 in Anlage mit einer Stirnfläche des ersten Kolbenkörpers 11 gebracht ist. Die Vorsprünge 63, welche sich in Anlage mit der korrespondierenden Fase des Kapselkörpers 31 befinden, sind - bezogen auf die Einschubrichtung - axial in Übereinstimmung mit der umlaufenden Ausnehmung 53 des zweiten Kolbenkörpers 21 gebracht. Der Vorsprung 25 ist in dem Kanal 19 aufgenommen. Die Darstellung der Materialüberschneidung in Figur 3 zum Zwecke der vereinfachten Darstellung deutet einerseits die erzeugte Flächenpressung zwischen dem Vorsprung 25 und dem Kanal 19 an, und andererseits die Ausbildung von verbleibenden Strömungskanälen in den Bereichen, wo keine Flächenpressung auftritt (dritter Aspekt der Erfindung).

Ist der Vorsprung 12 des ersten Kolbenkörpers vollständig in den Hohlraum 22 des zweiten Kolbenkörpers eingeführt, in dem sich in der Ausgangslage die Flüssigkeit 42 befunden hat, endet der erste Verfahrensschritt. Die herstellerseitig vorgesehene Flüssigkeitsmenge befindet sich nun in dem Mischraum 32 des Kapselkörpers 31. Anschließend erfolgt die Durchmischung in einem Mischgerät. Diese Mischgeräte sind in der Zahnarztpraxis allgemein üblich und versetzen die Kapsel in eine heftige Schüttelbewegung, die häufig im Wesentlichen parallel zur Längsachse der Kapsel gerichtet ist. Die Kapsel wird dafür bei den meisten Geräten in eine Aufnahmegabel eingespannt und durch eine Federkraft festgehalten. Die Einspannpunkte sind Kappe 34 und Flüssigkeitskolben 21. Das bewirkt, dass jeweils in der Umkehrlage der Schüttelbewegung neben der Federkraft der Aufnahmegabel zusätzlich eine Beschleunigungskraft auf den Flüssigkeitskolben 21 wirkt und eine etwaige unvollständige Flüssigkeitsentleerung beim Mischen noch verbessert wird. Je nach Art der Aufnahmegabel und des Mischgerätes ist es darüber hinaus möglich, auf dass die Aktivierung während des Einspannens und/oder während des Mischens stattfindet. Auf die manuelle Aktivierung kann in diesem Fall verzichtet werden.

Der nächste Verfahrensschritt zur Verwendung der Misch- und Applikationskapsel dient der Ausbringung der angemischten Paste 43 (Figur 4). Dazu wird das Gelenk 35 in die zweite Stellung gebracht, so dass die Kanüle 33 eine Verbindung zwischen Mischraum 32 und Außenbereich der Misch- und Applikationskapsel bildet. Durch weiteres Druckausüben auf den Flüssigkeitskolben 21 wird der Flüssigkeitskolben 21 und gleichzeitig der Stanzkolben 11 in Richtung des Mischraumes 32 verschoben und verringert dessen Volumen. Gleichzeitig wird der Mischraum 32 mittels der Entlüftungsvorrichtung des Kapselkörpers 31 oder Stanzkolbens 11 weiter entlüftet, sofern die Luft nicht aus der Kanüle austritt. Die angemischte Paste 43 wird durch die Kanüle 33 ausgebracht und kann appliziert werden.

Zwecks Vereinfachung der Darstellung ist ein Materialüberschnitt zwischen den Vorsprüngen 63 und der Innenwand des Kapselkörpers 31 dargestellt. Bei fotorealistischer Darstellung würde allerdings der jeweilige Vorsprung 63 in Folge einer Druckbeaufschlagung des zweiten Kolbenkörpers zumindest teilweise in die umlaufende Ausnehmung 53 zurückweichen, wodurch ein Verschieben des ersten Kolbenkörpers 11 innerhalb des Inneren des Kapselkörpers 31 ermöglicht wird. In der in Figur 4 gezeigten Stellung befindet sich der erste Kolbenkörper 11 in maximal eingeschobenem Zustand innerhalb des Kapselkörpers 31, der Mischraum 32 ist vollständig kollabiert. Die Kanüle 33 ist fluidleitend mit dem Kanal 19 verbunden.

Die Figuren 5-8 zeigen im Detail den ersten Kolbenkörper 11 der Kapsel 1 gemäß dem ersten Ausführungsbeispiel. In Figur 5 ist zu erkennen, dass der Kolbenkörper 11 mehrere Vorsprünge 63 entlang seiner äußeren Umfangsfläche aufweist. Gezeigt sind vier Vorsprünge 63. Der Kolbenkörper 11 weist einen Vorsprung 12 auf (siehe Figur 6) an dessen freistehendem Ende eine Schneide 59 ausgebildet ist. Die Schneide 59 ist zum Auftrennen einer Trennschicht 23 (siehe Figur 2) eingerichtet. Die Schneide 59 ist in mehreren Bereichen 61, vorliegend in vier Bereichen, aus Weichkomponente bestehend ausgebildet und somit intermittierend aus Hartkomponente und Weichkomponente bestehend ausgebildet. In Figur 5 ist der Blick auf das Verschlussmittel 55 freigegeben.

Figur 6 zeigt eine Querschnittsprojektion entlang der Schnittlinie B-B aus Figur 5. Es ist zu erkennen, dass der Kolbenkörper 11 eine Struktur W aufweist, die im Wesentlichen wellenförmig bzw. dem Buchstaben W entsprechend geformt ist (zweiter Aspekt der Erfindung). Diese Struktur W besteht aus Hartkomponente. Die Hartkomponente in dem wellenförmigen Bereich der Struktur W ist mit im Wesentlichen konstanter Wandstärke ausgebildet. In der Struktur W sind Hohlräume ausgebildet, welche mit Weichkomponente 67 verfüllt ist.

Das Verschlussmittel 55 weist eine Mehrzahl Verschlusselemente auf (erster Aspekt der Erfindung), die aus Weichkomponente ausgebildet sind und an einem mischraumseitigen Ende des Kanals 19 angeordnet sind. Die Verschlusselemente stützen sich in der gezeigten Stellung gegenseitig ab.

Die umlaufende Dichtung 57, welche sich an der Umfangsfläche zwischen dem Vorsprung 12 und der Randausnehmung 14 erstreckt, ist aus Weichkomponente ausgebildet und einstückig mit denjenigen Bereichen 61 der Schneide 59, die aus Weichkomponente bestehen, ausgebildet.

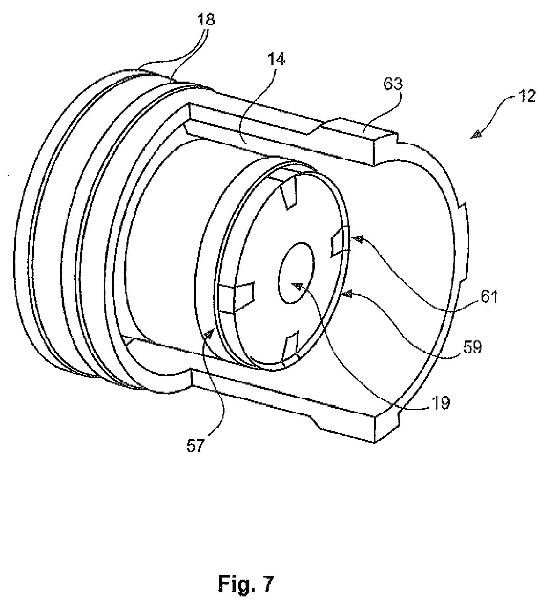

Wie auch in Figur 7 dargestellt ist, weist der Kolbenkörper 11 entlang seines Umfangs zusätzlich zu den Vorsprüngen 63 an einem gegenüberliegenden Ende mehrere, vorliegend zwei, Auskragungen 18 auf. Die Auskragungen 18 dienen zur Führung des Kolbenkörpers 11 innerhalb des Kapselkörpers 31 der Kapsel 1 und der Abdichtung gegen Austritt des angemischten Dentalpräparates beim Appliziervorgang.

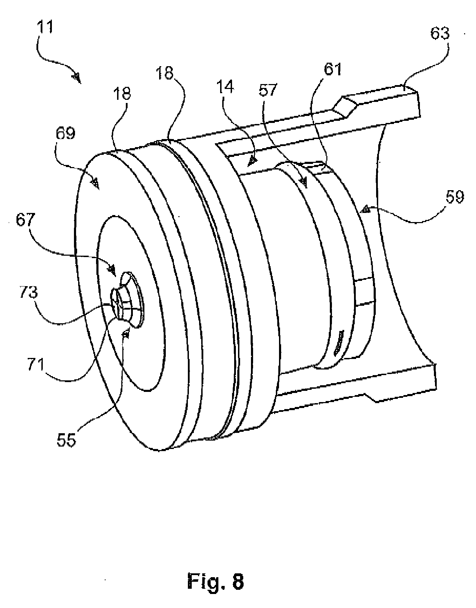

In Figur 8 ist der Kolbenkörper 11 in räumlicher Darstellung abgebildet. Es wird das Verschlussmittel 55 im Detail gezeigt (erster Aspekt der Erfindung). Das Verschlussmittel 55 steht an der Stirnseite der Weichkomponente 67 von einer Stirnfläche 69 des Kolbenkörpers 11 ab. Es ist ein kreuzförmiger Schlitz 71 vorgesehen, welcher insgesamt vier Verschlusselemente 73 voneinander trennt. Die Verschlusselemente 73 sind dazu eingerichtet, nach dem Vorbild einer Segelklappe bei Druckbeaufschlagung aus dem Inneren des Kanals 19 (siehe Figur 7) nach außen hin zu öffnen, um einen Fluidtransport in Richtung des Mischraums 32 (siehe Figuren 2-4) zu ermöglichen. Die Verschlusselemente 73 stützen sich in geschlossenem Zustand gegenseitig ab, wodurch ein Stofftransport in die entgegengesetzte Richtung - also in den Kanal 19 hinein - verhindert wird. Der Schlitz 71 ist vorzugsweise mittels einer scharfen Klinge oder mit Laserstrahlung eingebracht.

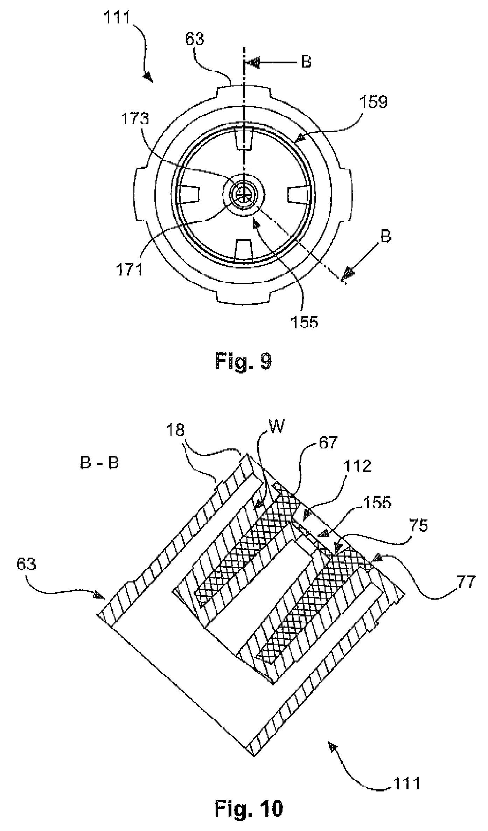

Die Figuren 9 und 10 zeigen einen ersten Kolbenkörper 111 für eine Kapsel gemäß einem zweiten Ausführungsbeispiel der vorliegenden Erfindung. Der Kolbenkörper 111 ist strukturell ähnlich aufgebaut wie der Kolbenkörper 11 aus dem ersten Ausführungsbeispiel. So weist auch der Kolbenkörper 111 insgesamt vier Vorsprünge 63 auf. Weiterhin weist der Kolbenkörper 111 an seinem äußeren Umfang zwei Auskragungen 18 auf zur Führung des Kolbenkörpers 111 innerhalb des Kapselkörpers 31 der Kapsel 1. Der Kolbenkörper 111 weist auch eine Struktur W mit im Wesentlichen konstanter Wandstärke auf, die aus der Hartkomponente gebildet ist (zweiter Aspekt der Erfindung), und Hohlräume aufweist, welche mit der Weichkomponente 67 ausgefüllt sind. Im Unterschied zu dem Kolbenkörper 11 gemäß dem ersten Ausführungsbeispiel weist der Kolbenkörper 111 ein Verschlussmittel 155 (erster Aspekt der Erfindung) auf. Das Verschlussmittel 155 ist mischraumseitig in einer Vertiefung 112 des Kolbenkörpers 111 angeordnet. Das Verschlussmittel 155 weist insgesamt vier Verschlusselemente 173 auf, welche durch einen kreuzförmigen Schlitz 171 voneinander getrennt sind. Die Verschlusselemente 173 sind im Wesentlichen in einer Ebene angeordnet. Die Weichkomponente 67 ist gemäß dem zweiten Ausführungsbeispiel mittels Schweißen mit der Hartkomponente verbunden. Eine erste Schweißnaht verläuft ringförmig entlang der Kante 75, und eine zweite Schweißnaht verläuft ringförmig entlang der Kante 77, wie in Figur 10 angedeutet ist. Das Schweißen erfolgt vorzugsweise per Ultraschall oder thermisch. Infolge der umlaufenden Schweißnaht ist der dickwandige Hohlraum der Hartkomponente hermetisch gegen Fluideintritt während der Druckbeaufschlagung (Aktivierung) verschlossen. Mit dieser Verbindungsmethode lässt sich die gewünschte Funktion auch bei Werkstoffkombinationen realisieren, die sich nicht im 2- Komponenten-Verfahren spritzgießen lassen. Alternativ ist das Befestigen der Weichkomponente 67 und der Hartkomponente aneinander mittels Kleben oder Spritzgießen möglich. Spritzgießen ist insbesondere für bestimmte Materialkombinationen vorteilhaft, wie vorstehend in der Beschreibung ausgeführt wurde.

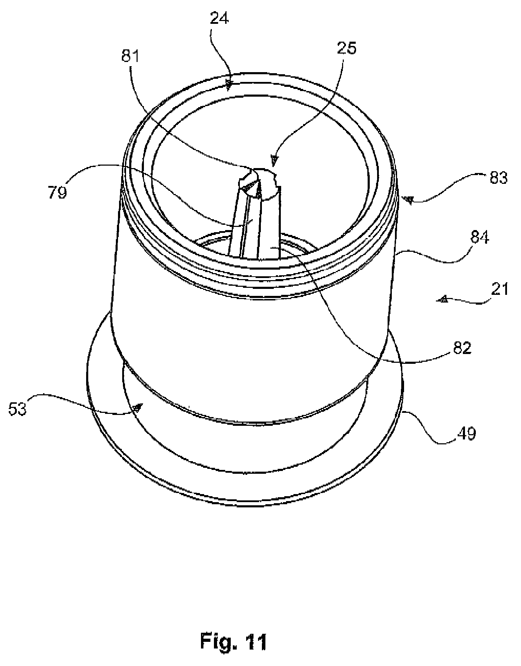

Figur 11 zeigt eine räumliche Darstellung eines zweiten Kolbenkörpers 21 der erfindungsgemäßen Kapsel 1. Der zweite Kolbenkörper 21, welcher eine umlaufende Ausnehmung 53 und eine Auskragung 49 aufweist (siehe auch Figuren 1, 2-4) sowie einen Vorsprung 25, welcher gemäß Figur 11 eine im Wesentlichen konisch verjüngte Anlagefläche 82 aufweist. Der Vorsprung 25 des zweiten Kolbenkörpers 21 ist derart an den Kanal 19 des ersten Kolbenkörpers 11 (siehe Figuren 2 bis 10) angepasst, dass in einer Anlageposition des Vorsprungs 25 und des Kanals 19 aneinander ein oder mehrere Strömungskanäle verbleiben (dritter Aspekt der Erfindung). Die Anlagefläche 82 ist von insgesamt drei Ausnehmungen 79 unterbrochen. Die Ausnehmungen 79 erstrecken sich in Längsrichtung des Vorsprungs 25. An der Spitze des Vorsprungs 25 ist eine Spitze 81 ausgebildet. Die Spitze 81 erleichtert das Zerstören einer Trennschicht (Trennschicht 23, siehe Figuren 2-4).

Entlang einer äußeren Umfangsfläche 84 des zweiten Kolbenkörpers 21 ist eine umlaufende Auskragung 83 ausgebildet. Die Auskragung 83 unterstützt das Führen des Randbereichs 24 des zweiten Kolbenkörpers 21 innerhalb der Randausnehmung 14 des ersten Kolbenkörpers (siehe Figuren 2-4).

Figur 12 zeigt den kanülenseitigen Endabschnitt der Kapsel 1. An einem Ende des Kapselkörpers 31 ist die Kanüle 33 angeordnet. Die Kanüle 33 weist ein Gelenk 35 auf, welches in einer Aufnahme 47 drehbar gehaltert wird. Die Kanüle 33 ist in Figur 12 in geschlossener Stellung gezeigt. Die Kanüle 33 ist bezogen auf die Austreibrichtung (entlang Achse 87) abgewinkelt in die Flanken 45 eingesetzt und in ihrer Rastposition gehaltert. Die Richtung des Einsetzens und Herausnehmens der Kanüle 33 ist durch die Pfeile 85 in Figur 12 angedeutet.

## Patentansprüche

1. Misch- und Applikationskapsel zur Herstellung eines Dentalpräparates (43),
wobei die Misch- und Applikationskapsel aufweist:
einen Kapselkörper (31) mit einem Mischraum (32) zum Aufnehmen einer Mischkomponente (41) und zum Mischen des Dentalpräparates (43) aus der Mischkomponente (41) und einem Fluid (42) und mit einer Austrittsöffnung (33) zum Ausbringen des Dentalpräparates (43),
einen Hohlraum (22) zum Aufnehmen des Fluids (42),
einen im Kapselkörper (31) verschiebbaren ersten Kolbenkörper (11), der den Mischraum (32) im Kapselkörper (31) begrenzt und der einen Kanal (19) zum Führen des Fluids (42) von dem Hohlraum (22) in den Mischraum (32) aufweist,
einen im Kapselkörper (31) relativ zu dem ersten Kolbenkörper (11) verschiebbaren zweiten Kolbenkörper (21),
wobei der erste Kolbenkörper (11) teilweise oder vollständig aus zwei oder mehr voneinander unterschiedlichen Materialien, umfassend mindestens eine Weichkomponente und mindestens eine Hartkomponente, besteht,
der zweite Kolbenkörper den Hohlraum (22) zum Aufnehmen des Fluids (42) aufweist,
der erste Kolbenkörper (11) einen Vorsprung (12) aufweist,
der Hohlraum (22) des zweiten Kolbenkörpers (21) dazu ausgestaltet ist, den Vorsprung (12) des ersten Kolbenkörpers (11) aufzunehmen,
der Hohlraum (22) von einer Trennschicht (23), vorzugsweise einer Trennfolie, verschlossen ist, und
der Vorsprung (12) dazu eingerichtet ist
die Trennschicht (23) zu durchdringen, wenn der erste Kolbenkörpers (11) und der zweite Kolbenkörper (21) relativ zueinander bewegt werden.

2. Misch- und Applikationskapsel nach Anspruch 1,
wobei der Kanal (19) Verschlussmittel (55, 155) mit einem oder mehreren Verschlusselementen (73, 173) aufweist, welche In drucklosem Zustand derart anliegen, dass das Verschlussmittel (55, 155) undurchlässig für den Übertritt von Mischkomponente (41) in den Kanal (19) ist, und welche dazu eingerichtet sind, den Kanal (19) unter Druckbeaufschlagung des Hohlraums (22) in Richtung des Mischraums (32) freizugeben,
und die Verschlusselemente (73, 173) des Verschlussmittels (55, 155) teilweise oder vollständig aus der Weichkomponente bestehen.

3. Misch- und Applikationskapsel nach Anspruch 1 oder 2,
wobei die Mischkomponente ein pulverförmiges Material umfasst, vorzugsweise ein pulverförmiges Material ist,
wobei vorzugsweise das pulverförmige Material eine durchschnittliche Partikelgröße (d₅₀) aufweist, welche in einem Bereich von 1µm bis 100µm liegt; und/oder wobei die Mischkomponente (41) in dem Mischraum (32) des Kapselkörper (31) enthalten ist.

4. Misch- und Applikationskapsel nach einem der vorherigen Ansprüche,
aufweisend ein oder mehrere Verschlusselemente (73, 173),
wobei die Verschlusselemente (73, 173) als Taschenklappen oder Segelklappen ausgebildet sind; und/oder
wobei die Verschlusselemente (73, 173) zum Freigeben des Kanals (19) elastisch verformbar sind; und/oder
wobei die Verschlusselemente (73, 173) und der Kanal (19) einstückig ausgebildet sind; und/oder
wobei das oder die Verschlusselemente dazu angepasst sind, den Kanal unter Druckbeaufschlagung mittels Rissbildung, vorzugsweise in dem Material der Weichkomponente oder in einem Übergangsbereich zwischen den Materialien der Weichkomponente und der Hartkomponente, freizugeben.

5. Misch- und Applikationskapsel nach einem der vorherigen Ansprüche,
wobei die Verschlusselemente (73, 173) dazu ausgebildet sind, unter Druckbeaufschlagung eine schlitzförmige, kreuzförmige oder sternförmige Öffnung des Kanals (19) freizugeben.

6. Misch- und Applikationskapsel nach einem der vorangehenden Ansprüche,
wobei der Vorsprung (12) derart an dem Kolbenkörpers (11) ausgebildet ist, dass der Kolbenkörper (12) eine Struktur (W) mit im Wesentlichen konstanter Wandstärke aufweist, vorzugsweise eine Wandstärke in einem Bereich von 0,3mm bis 3mm aufweist, und wobei die Struktur (W) aus der Hartkomponente besteht.

7. Misch- und Applikationskapsel nach Anspruch 6,
wobei an der Struktur (W) ein oder mehrere Hohlräume ausgebildet sind, welche teilweise oder vollständig mit der Weichkomponente gefüllt sind.

8. Misch- und Applikationskapsel nach einem der vorangehenden Ansprüche,
wobei der zweite Kolbenkörper (21) einen Vorsprung (25) aufweist,
wobei der Kanal (19) ausgestaltet ist, um den Vorsprung (25) des zweiten Kolbenkörpers (21) aufzunehmen, und
wobei der Vorsprung (25) und der Kanal (19) derart aneinander angepasst sind, dass in einer Anlageposition des Vorsprungs (25) und des Kanals (19) aneinander ein oder mehrere Strömungskanäle verbleiben.

9. Misch- und Applikationskapsel nach Anspruch 8,
wobei der Vorsprung (25) und der Kanal (19) jeweils eine oder mehrere Anlageflächen aufweisen, welche in der Ablageposition des Vorsprungs (25) und des Kanals (19) aneinander fluiddicht miteinander abschließen.

10. Misch- und Applikationskapsel nach Anspruch 9,
wobei in der einen oder den mehreren Anlageflächen des Vorsprungs (25) und/oder in der einen oder den mehreren Anlageflächen des Kanals (19) Vertiefungen mit Wandungen ausgebildet sind, welche einen oder mehrere Strömungskanäle zum Fluidtransport definieren,
wobei die Wandungen vorzugsweise derart verformbar sind, dass die Strömungskanäle unter Aufbringen einer Presskraft in der Anlageposition auf den Vorsprung (25) und/oder den Kanal teilweise oder vollständig verschließbar sind.

11. Misch- und Applikationskapsel nach einem der Ansprüche 8 bis 10,
wobei der Vorsprung (25) dazu eingerichtet sind, die Trennschicht (23) zu durchdringen, wenn der erste Kolbenkörper (11) und der zweite Kolbenkörper (21) relativ zueinander bewegt werden.

12. Misch- und Applikationskapsel nach einem der Ansprüche 8 bis 11, wobei der Vorsprung (25) des zweiten Kolbenkörpers (21) abschnittsweise oder vollständig einen Durchmesser aufweist, welcher den Durchmesser des Kanals (19) derart übersteigt, dass bei einer Aufnahme des Vorsprungs (25) in den Kanal (19) ab einer bestimmten Eindringtiefe, vorzugsweise in einem Bereich von 5 bis 20 mm, die Außenfläche des Vorsprungs (25) und die Innenfläche des Kanals (19) wenigstens teilweise fluiddicht aneinander liegen; und/oder
wobei der Vorsprung (25) im Wesentlichen kegelförmig ausgebildet ist.

13. Misch- und Applikationskapsel nach einem der vorstehenden Ansprüche,
wobei der Kanal (19) in Richtung des Hohlraums (22) einen, vorzugsweise konisch, erweiterten Querschnitt aufweist; und/oder
wobei der Vorsprung (12) des ersten Kolbenkörpers (11) eine Schneide (15) zum Aufschneiden der Trennschicht (23) aufweist, wobei die Schneide (15) entlang des Umfanges des Vorsprungs (12) angeordnet ist, und wobei die umlaufende Dichtung proximal zu der Schneide angeordnet ist, vorzugsweise in einem Abstand von 0,5 mm bis 5 mm.

14. Misch- und Applikationskapsel nach einem der vorherigen Ansprüche,
wobei die Austrittsöffnung (33) in einer Kanüle angeordnet ist, welche mittels eines Gelenks (35) drehbar an einem Ende des Kapselkörpers (31) aufgenommen ist,
wobei die Kanüle in einer Aufnahme (A) an dem Kapselkörper mittels einer Rastverbindung befestigt ist, und
wobei die Richtung, in welcher die Kanüle eingerastet ist, zu der Ausbringrichtung des Dentalpräparats (43) abgewinkelt ist.

15. Misch- und Applikationskapsel nach einem der vorherigen Ansprüche,
wobei der Vorsprung (12) des ersten Kolbenkörpers (11) eine Schneide (15) zum Aufschneiden der Trennschicht (23) aufweist, wobei die Schneide (15) entlang des Umfanges des Vorsprungs (12) angeordnet ist, und
die Schneide (15) entlang des Umfanges intermittierend aus der Weichkomponente und der Hartkomponente besteht, vorzugsweise in vier Bereichen, die winklig jeweils um 90° beabstandet sind, aus Weichkomponente besteht; und/oder
wobei der zweite Kolbenkörper (21) an einem dem Hohlraum (22) gegenüberliegenden Ende eine Auskragung aufweist, vorzugsweise mit gerundeten Kanten; und/oder
wobei das Material der Weichkomponente ein thermoplastisches Elastomer (TPE) umfasst und das Material der Hartkomponente Polypropylen umfasst, und/oder
wobei das Material der Weichkomponente Silikon umfasst und das Material der Hartkomponente ein Polyester, vorzugsweise Polybutylenterephthalat (PBT), umfasst; und/oder
wobei das Material der Weichkomponente ein thermoplastisches Elastomer (TPE) umfasst und das Material der Hartkomponente Polyoxymethylen (POM) umfasst, und/oder
wobei das Material der Weichkomponente Polyethylen (PE) umfasst und das Material der Hartkomponente Polypropylen (PP) umfasst; und/oder
wobei der zweite Kolbenkörper (21) aus Polyethylen hoher Dichte (HDPE) besteht und die Trennschicht aus Polyethylen (PE) besteht.

## Claims

1. A mixing and application capsule for producing a dental preparation (43), wherein the mixing and application capsule has:
a capsule body (31) having a mixing chamber (32) for receiving a blend component (41) and for mixing the dental preparation (43) from the blend component (41) and a fluid (42) and having an outlet (33) for discharging the dental preparation (43),
a hollow space (22) for receiving the fluid (42),
a first plunger body (11), displaceable in the capsule body (31), which bounds the mixing chamber (32) in the capsule body (31) and which has a channel (19) for carrying the fluid (42) from the hollow space (22) into the mixing chamber (32),
a second plunger body (21) displaceable in the capsule body (31) relative to the first plunger body (11),
wherein the first plunger body (11) is partially or completely composed of two or more differing materials comprising at least one soft component and at least one hard component,
the second plunger body has the hollow space (22) for receiving the fluid (42),
the first plunger body (11) has a projection (12),
the hollow space (22) of the second plunger body (21) is configured to receive the projection (12) of the first plunger body (11),
the hollow space (22) is sealed by a separating layer (23), preferably a separating film, and
the projection (12) is arranged to penetrate the separating layer (23) when the first plunger body (11) and the second plunger body (21) are moved relative to one another.

2. A mixing and application capsule according to claim 1,
wherein the channel (19) has sealing means (55, 155) with one or a plurality of sealing elements (73, 173) which in the pressure-less state are contiguous in such a manner that the sealing means (55, 155) are impervious to the passage of blend component (41) into the channel (19) and which are arranged to free the channel (19) in the direction of the mixing chamber (32) under pressurization of the hollow space (22),
and the sealing elements (73, 173) of the sealing means (55, 155) are partially or completely composed of the soft component.

3. A mixing and application capsule according to claim 1 or 2,
wherein the blend component comprises a pulverulent material, preferably is a pulverulent material,
wherein preferably the pulverulent material has an average particle size (d₅₀) which lies in a range from 1µm to 100µm; and/or
wherein the blend component (41) is contained in the mixing chamber (32) of the capsule body (31).

4. A mixing and application capsule according to any one of the previous claims,
having one or more sealing elements (73, 173),
wherein the sealing elements (73,173) are in the form of semilunar valves or atrioventricular valves; and/or
wherein the sealing elements (73, 173) are elastically deformable to free the channel (19); and/or
wherein the sealing elements (73, 173) and the channel (19) are in one piece;
and/or
wherein the sealing element(s) is/are adapted so that under pressure they free the channel by means of crack formation, preferably in the material of the soft component or in a transition region between the materials of the soft component and the hard component.

5. A mixing and application capsule according to any one of the previous claims,
wherein the sealing elements (73, 173) are such that under pressure they free a slit-shaped, cross-shaped or star-shaped opening of the channel (19).

6. A mixing and application capsule according to any one of the preceding claims,
wherein the projection (12) is formed on the plunger body (11) in such a manner that the plunger body (12) has a structure (W) with substantially constant wall thickness, preferably a wall thickness in a range from 0.3mm to 3mm, and wherein the structure (W) is composed of the hard component.

7. A mixing and application capsule according to claim 6,
wherein one or a plurality of hollow spaces are formed at the structure (W), which are partially or completely filled with the soft component.

8. A mixing and application capsule according to any one of the preceding claims,
wherein the second plunger body (21) has a projection (25),
wherein the channel (19) is configured to receive the projection (25) of the second plunger body (21), and
wherein the projection (25) and the channel (19) are adapted to one another in such a manner that in a contact position of the projection (25) and the channel (19) against one another there remain one or a plurality of flow channels.

9. A mixing and application capsule according to claim 8,
wherein the projection (25) and the channel (19) each have one or a plurality of contact surfaces which in the contact position of the projection (25) and the channel (19) against one another seal in a fluid-tight manner with one another.

10. A mixing and application capsule according to claim 9,
wherein in the one or more contact surfaces of the projection (25) and/or in the one or more contact surfaces of the channel (19) there are recesses with walls which define one or more flow channels for fluid transportation,
wherein the walls are preferably deformable in such a manner that the flow channels are partially or completely sealable with application of a force of pressure onto the projection (25) and/or the channel in the contact position.

11. A mixing and application capsule according to any one of claims 8 to 10,
wherein the projection (25) is arranged to penetrate the separating layer (23) when the first plunger body (11) and the second plunger body (21) are moved relative to one another.

12. A mixing and application capsule according to any one of claims 8 to 11, wherein portions or the entirety of the projection (25) of the second plunger body (21) has/have a diameter which exceeds the diameter of the channel (19) in such a manner that when the projection (25) is received in the channel (19), from a certain penetration depth, preferably in a range from 5 to 20 mm, the outer surface of the projection (25) and the inner surface of the channel (19) at least partially rest against one another in a fluid-tight manner; and/or
wherein the projection (25) is substantially cone-shaped.

13. A mixing and application capsule according to any one of the preceding claims,
wherein the channel (19) has a, preferably conical, widened cross-section in the direction of the hollow space (22); and/or
wherein the projection (12) of the first plunger body (11) has a cutting edge (15) to cut open the separating layer (23), wherein the cutting edge (15) is arranged along the circumference of the projection (12), and wherein the circumferential seal is arranged proximally to the cutting edge, preferably at a distance from 0.5 mm to 5 mm.

14. A mixing and application capsule according to any one of the preceding claims,
wherein the outlet (33) is arranged in a cannula which is rotatably received at one end of the capsule body (31) by means of a joint (35), wherein the cannula is secured in a receiver (A) on the capsule body by means of a snap-in connection, and
wherein the direction in which the cannula is snapped in place is angled to the delivery direction of the dental preparation (43).

15. A mixing and application capsule according to any one of the previous claims,
wherein the projection (12) of the first plunger body (11) has a cutting edge (15) to cut open the separating layer (23), wherein the cutting edge (15) is arranged along the circumference of the projection (12), and
the cutting edge (15) is composed intermittently of the soft component and the hard component along the circumference, preferably in four regions, which are each angularly spaced apart at 90° to one another, is composed of soft component; and/or
wherein the second plunger body (21) has an overhang at an end opposite the hollow space (22), preferably with rounded edges; and/or
wherein the material of the soft component comprises a thermoplastic elastomer (TPE) and the material of the hard component comprises polypropylene, and/or
wherein the material of the soft component comprises silicone and the material of the hard component comprises a polyester, preferably polybutylene terephthalate (PBT); and/or
wherein the material of the soft component comprises a thermoplastic elastomer (TPE) and the material of the hard component comprises polyoxymethylene (POM), and/or
wherein the material of the soft component comprises polyethylene (PE) and the material of the hard component comprises polypropylene (PP); and/or
wherein the second plunger body (21) is composed of high-density polyethylene (HDPE) and the separating layer is composed of polyethylene (PE).

## Revendications

1. Capsule de mélange et d'application servant à la fabrication d'une préparation dentaire (43),
dans laquelle la capsule de mélange et d'application présente :
un corps de capsule (31) comportant un espace de mélange (32) servant à loger un composant de mélange (41) et servant à mélanger la préparation dentaire (43) composée du composant de mélange (41) et d'un fluide (42) et pourvu d'une ouverture de sortie (33) servant à distribuer la préparation dentaire (43),
un espace creux (22) servant à loger le fluide (42),
un premier corps de piston (11) pouvant être déplacé par coulissement dans le corps de capsule (31), lequel délimite l'espace de mélange (32) dans le corps de capsule (31) et lequel présente un canal (19) servant à guider le fluide (42) de l'espace creux (22) dans l'espace de mélange (32),
un deuxième corps de piston (21) pouvant être déplacé par coulissement dans le corps de capsule (31) par rapport au premier corps de piston (11),
dans laquelle le premier corps de piston (11) est constitué en partie ou en totalité de deux matériaux ou plus différents l'un de l'autre, comprenant au moins un composant mou et au moins un composant dur,
le deuxième corps de piston présente l'espace creux (22) servant à loger le fluide (42),
le premier corps de piston (11) présente une partie faisant saillie (12),
l'espace creux (22) du deuxième corps de piston (21) est configuré pour loger la partie faisant saillie (12) du premier corps de piston (11),
l'espace creux (22) est fermé par une couche de séparation (23), de préférence par un film de séparation, et
la partie faisant saillie (12) est mise au point afin
de traverser la couche de séparation (23)
lorsque le premier corps de piston (11) et le deuxième corps de piston (21) sont déplacés l'un par rapport à l'autre.

2. Capsule de mélange et d'application selon la revendication 1,
dans laquelle le canal (19) présente des moyens de fermeture (55, 155) pourvus d'un ou de plusieurs éléments de fermeture (73, 173), lesquels reposent dans un état sans pression de telle manière que le moyen de fermeture (55, 155) est imperméable pour le passage du composant de mélange (41) dans le canal (19), et lesquels sont mis au point afin de dégager le canal (19) en soumettant l'espace creux (22) à l'action d'une pression en direction de l'espace de mélange (32),
et que les éléments de fermeture (73, 173) du moyen de fermeture (55, 155) sont constitués en partie ou en totalité du composant mou.

3. Capsule de mélange et d'application selon la revendication 1 ou 2,
dans laquelle le composant de mélange comprend un matériau pulvérulent, de préférence est un matériau pulvérulent,
dans laquelle de préférence le matériau pulvérulent présente une granulométrie moyenne (d₅₀), qui se situe dans une plage allant de 1 µm à 100 µm ; et/ou
dans laquelle le composant de mélange (41) est contenu dans l'espace de mélange (32) du corps de capsule (31).

4. Capsule de mélange et d'application selon l'une quelconque des revendications précédentes,
présentant un ou plusieurs éléments de fermeture (73, 173),
dans laquelle les éléments de fermeture (73, 173) sont réalisés sous la forme de rabats de poche ou sous la forme de rabats en toile ; et/ou
dans laquelle les éléments de fermeture (73, 173) peuvent être déformés élastiquement afin de dégager le canal (19) ; et/ou
dans laquelle les éléments de fermeture (73, 173) et le canal (19) sont réalisés d'un seul tenant ; et/ou
dans laquelle l'élément de fermeture ou les éléments de fermeture sont adaptés afin de dégager le canal sous l'action d'une pression au moyen d'une formation de fissure, de préférence dans le matériau du composant mou ou dans une zone de transition entre les matériaux du composant mou et du composant dur.

5. Capsule de mélange et d'application selon l'une quelconque des revendications précédentes,
dans laquelle les éléments de fermeture (73, 173) sont réalisés afin de dégager, sous l'action d'une pression, une ouverture en forme d'entaille, en forme de croix ou en forme d'étoile, du canal (19).

6. Capsule de mélange et d'application selon l'une quelconque des revendications précédentes,
dans laquelle la partie faisant saillie (12) est réalisée de telle manière au niveau du corps de piston (11) que le corps de piston (12) présente une structure (W) présentant une épaisseur de paroi essentiellement constante, de préférence une épaisseur de paroi située dans une plage allant de 0,3 mm à 3 mm,
et dans laquelle la structure (W) est constituée du composant dur.

7. Capsule de mélange et d'application selon la revendication 6,
dans laquelle un ou plusieurs espaces creux sont réalisés au niveau de la structure (W), lesquels sont remplis en partie ou en totalité du composant mou.

8. Capsule de mélange ou d'application selon l'une quelconque des revendications précédentes,
dans laquelle le deuxième corps de piston (21) présente une partie faisant saillie (25),
dans laquelle le canal (19) est configuré afin de recevoir la partie faisant saillie (25) du deuxième corps de piston (21), et
dans laquelle la partie faisant saillie (25) et le canal (19) sont adaptés l'un à l'autre de telle manière qu'un ou plusieurs canaux d'écoulement restent dans une position d'appui l'un contre l'autre de la partie faisant saillie (25) et du canal (19).

9. Capsule de mélange et d'application selon la revendication 8,
dans laquelle la partie faisant saillie (25) et le canal (19) présentent respectivement une ou plusieurs surfaces d'appui, qui sont alignées les unes avec les autres de manière étanche aux fluides dans la position d'appui l'un contre l'autre de la partie faisant saillie (25) et du canal (19).

10. Capsule de mélange et d'application selon la revendication 9,
dans laquelle sont réalisés dans l'une ou dans plusieurs surfaces d'appui de la partie faisant saillie (25) et/ou dans l'une ou dans plusieurs surfaces d'appui du canal (19), des renfoncements pourvus de parois, qui définissent un ou plusieurs canaux d'écoulement servant au transport de fluide,
dans laquelle les parois peuvent être déformées de préférence de telle manière que les canaux d'écoulement peuvent être fermés en partie ou en totalité en appliquant une force de pression dans la position d'appui sur la partie faisant saillie (25) et/ou sur le canal.

11. Capsule de mélange et d'application selon l'une quelconque des revendications 8 à 10,
dans laquelle la partie faisant saillie (25) est mise au point afin de traverser la couche de séparation (23) lorsque le premier corps de piston (11) et le deuxième corps de piston (21) sont déplacés l'un par rapport à l'autre.

12. Capsule de mélange et d'application selon l'une quelconque des revendications 8 à 11, dans laquelle la partie faisant saillie (25) du deuxième corps de piston (21) présente par endroits ou en totalité un diamètre, qui dépasse le diamètre du canal (19) de telle manière que, lorsque la partie faisant saillie (25) est logée dans le canal (19) à partir d'une profondeur de pénétration donnée, située de préférence dans une plage allant de 5 à 20 mm, la surface extérieure de la partie faisant saillie (25) et la surface intérieure du canal (19) reposent l'une contre l'autre au moins en partie de manière étanche aux fluides ; et/ou
dans laquelle la partie faisant saillie (25) est réalisée essentiellement de manière à présenter une forme conique.

13. Capsule de mélange et d'application selon l'une quelconque des revendications précédentes,
dans laquelle le canal (19) présente, en direction de l'espace creux (22), une section transversale élargie, de préférence conique ; et/ou
dans laquelle la partie faisant saillie (12) du premier corps de piston (11) présente une lame (15) servant à découper la couche de séparation (23), dans laquelle la lame (15) est disposée le long de la périphérie de la partie faisant saillie (12), et dans laquelle le joint d'étanchéité périphérique est disposé de manière proximale par rapport à la lame, de préférence à une distance allant de 0,5 mm à 5 mm.

14. Capsule de mélange et d'application selon l'une quelconque des revendications précédentes,
dans laquelle l'ouverture de sortie (33) est disposée dans une canule, qui est logée au moyen d'une articulation (35) de manière à pouvoir tourner au niveau d'une extrémité du corps de capsule (31),
dans laquelle la canule est fixée dans un logement (A) au niveau du corps de capsule au moyen d'un système d'assemblage par enclenchement, et
dans laquelle la direction, dans laquelle la canule est enclenchée, est inclinée par rapport à la direction de distribution de la préparation dentaire (43).

15. Capsule de mélange et d'application selon l'une quelconque des revendications précédentes,
dans laquelle la partie faisant saillie (12) du premier corps de piston (11) présente une lame (15) servant à découper la couche de séparation (23), dans laquelle la lame (15) est disposée le long de la périphérie de la partie faisant saillie (12), et
la lame (15) est constituée, le long de sa périphérie, par intermittence, du composant mou et du composant dur, de préférence dans quatre zones, qui sont espacées selon un angle respectivement de 90° ; et/ou
dans laquelle le deuxième corps de piston (21) présente, au niveau d'une extrémité faisant face à l'espace creux (22), un appendice, pourvu de préférence d'angles arrondis ; et/ou
dans laquelle le matériau du composant mou comprend un élastomère thermoplastique (TPE) et que le matériau du composant dur comprend du polypropylène, et/ou
dans laquelle le matériau du composant mou comprend du silicone et le matériau du composant dur comprend un polyester, de préférence du polytéréphtalate de butylène (PBT) ; et/ou
dans laquelle le matériau du composant mou comprend un élastomère thermoplastique (TPE) et le matériau du composant dur comprend du polyoxyméthylène (POM), et/ou
dans laquelle le matériau du composant mou comprend du polyéthylène (PE) et le matériau du composant dur comprend du polypropylène (PP) ; et/ou
dans laquelle le deuxième corps de piston (21) est constitué de polyéthylène haute densité (PEHD) et la couche de séparation est constituée de polyéthylène (PE).
